# FASCICULE DE BREVET EUROPEEN

(11) **EP 3 893 470 B1**
(45) Date de publication et mention de la délivrance du brevet: **12.10.2022**
(21) Numéro de dépôt: 21167486.6
(22) Date de dépôt: 08.04.2021
(51) Int. Cl.: H04L 67/12, H04L 67/62

(54) **PROCÉDÉ D' OPTIMISATION DE MISE À JOUR D' OBJETS CONNECTÉS ET MODULE APPLICATIF**
VERFAHREN ZUR OPTIMIERUNG DER AKTUALISIERUNG VON VERBUNDENEN OBJEKTEN UND ANWENDUNGSMODUL
METHOD FOR OPTIMISING UPDATE OF CONNECTED OBJECTS AND APPLICATION MODULE

(30) Priorité: 09.04.2020 FR 2003608
(43) Date de publication de la demande: 13.10.2021
(73) Titulaire: Bull SAS, 78340 Les Clayes-sous-Bois (FR)
(72) Inventeur: AIELLO, Damien, 38500 LA BUISSE (FR); DEMEILLIEZ, Bruno, 38380 SAINT LAURENT DU PONT (FR); MENIGOT, Gilles, 38190 FROGES (FR)
(74) Mandataire: IPAZ

(56) Documents cités:
- WO-A1-2009/120597

## Description

L'invention s'intéresse au domaine des objets connectés ou IdO (pour internet des objets, IoT en terminologie anglo-saxonne pour Internet of Things), et plus particulièrement au domaine de la communication des IoTs, et de manière encore plus particulière aux mises à jour des loTs. L'invention concerne un procédé d'optimisation de mise à jour des loTs. L'invention concerne en outre un module applicatif destiné à optimiser les mises à jour des loTs. L'invention concerne également un système comportant au moins un module applicatif et au moins un loT.

### [Art antérieur]

Historiquement, les entités adressables sur le réseau Internet étaient uniquement des éléments d'information numériques, à savoir des pages HTML ou d'autres fichiers accessibles en ligne, et identifiables par des adresses URL de sites web, par exemple. Considéré comme la troisième révolution de l'internet, l'internet des objets ou IdO (en anglais « Internet Of Things », ou loT) peut être regardé comme l'extension d'Internet à des éléments physiques.

L'internet des objets désigne l'ensemble des objets connectés à internet et correspond au domaine des Technologies de l'Information et de la Communication (ou TIC) qui est en pleine expansion. Les dispositifs électroniques concernés par ces applications sont appelés des objets connectés, en ce sens qu'ils peuvent interagir au travers d'une pluralité de sous-réseaux locaux pouvant être connectés à un réseau central à haut débit comme l'Internet. Ainsi, une définition de l'internet des objets est proposée dans l'ouvrage intitulé L'INTERNET DES OBJETS, de Pierre-Jean Benghozi, Sylvain Bureau, et Françoise Massit-Folléa publié aux Éditions de la Maison des sciences de l'homme, Chapitre 1, pp. 15-23, comme étant « un réseau de réseaux qui permet, via des systèmes d'identification électronique normalisés et unifiés, et des dispositifs mobiles sans fil, d'identifier directement et sans ambiguïté des entités numériques et des objets physiques et ainsi de pouvoir récupérer, stocker, transférer et traiter, sans discontinuité entre les mondes physiques et virtuels, les données s'y rattachant. »

Les usages des objets connectés sont très variés et peuvent aller du domaine de l'e-santé à celui de la domotique en passant par les téléphones mobiles. Les objets connectés envahissent un peu plus chaque jour notre quotidien et ils sont également impliqués dans le concept d'environnement intelligent et notamment de ville intelligente (ou « Smart City », en anglais), la surveillance (en anglais : « monitoring ») d'installations industrielles, les transports et la logistique, les voitures autonomes, l'agriculture, etc. En 2015, on comptait 4,9 milliards « objets connectés ». On parle de 25 à 150 milliards d'objets connectés en 2025. A cette croissance exponentielle, s'ajoute une très grande diversité des domaines d'applications : santé, transport, commerce, domotique... De plus, outre l'augmentation du nombre d'objets connectés il est possible d'observer une multiplication des fonctionnalités ou applications associées à ces objets connectés.

Cette augmentation du nombre d'objets connectés entraine également une augmentation des mises à jour de ces mêmes objets connectés. En effet, plus le nombre d'objets connectés et d'applications augmente plus il est nécessaire d'assurer un bon fonctionnement, une amélioration des capacités et fonctionnalités, de la sécurité, etc.

Typiquement, les mises à jour sont téléchargées automatiquement par l'objet connecté qui implémente alors ladite mise à jour à son fonctionnement. Or, les mises à jour sont souvent réalisées de façon anarchique, c'est-à-dire qu'elles ne sont ni régulées ni ordonnées ni limitées. Par ailleurs, les mises à jour sont souvent conditionnées à l'approbation d'un utilisateur, qui lorsque celui-ci donne son accord, ladite mise à jour se télécharge et s'installe sans aucun prérequis.

De surcroit, les mises à jour sont mises en place par l'ensemble des objets connectés au même moment. Ceci se traduit par une forte contrainte pour un utilisateur qui se retrouve privé de l'usage des services et fonctionnalités des objets connectés et de leurs applications. De plus, lors de l'installation d'une mise à jour, l'objet connecté se voit forcé d'attribuer des ressources à ladite installation. Aussi, une raréfaction des ressources entraine par la même occasion un ralentissement, voir une indisponibilité qui affecte aussi l'utilisateur.

A cela s'ajoute en parallèle les échanges quotidiens entre loTs qui peuvent représenter des centaines voire des milliers de données qu'un objet connecté peut régulièrement envoyer et/ou recevoir pour communiquer. Du fait du nombre de données et de la fréquence des échanges cela peut rapidement représenter un volume de données conséquent d'autant plus que l'internet des objets peut comprendre de très nombreuses applications.

Ainsi, l'installation d'une mise à jour nécessaire aux loTs en parallèle avec l'augmentation d'échanges de données croissante se traduit par une augmentation considérable du volume de données échangées sur les réseaux de communication. Cela peut entrainer des saturations des réseaux de communications sur certaines périodes de temps. Les temps de téléchargement de mises à jour peuvent s'en trouver augmentés. L'ensemble indisposant alors un utilisateur, tout comme pouvant entrainer de mauvaises transmissions ou d'absence de transmission des données qu'elles se rapportent aux échanges entre loTs ou à la mise à jour en tant que telle. La conséquence directe est donc un risque augmenté de dysfonctionnement et de perturbation des interactions avec un utilisateur ou dispositif tiers.

L'impact sur un utilisateur est par conséquent accentué, et celui-ci se retrouve face à une indisponibilité totale ou partielle de l'objet connecté, des applications et des services.

Il existe des systèmes pour effectuer des mises à jour des objets connectés. Par exemple, le document WO2019157436 propose l'utilisation de concentrateur (« loT-Hub » en terminologie anglo-saxonne) pour centraliser des données utilisateurs et transmettre la mise à jour à l'IoT lorsque celui-ci est le moins consommateur d'énergie. Toutefois, ces systèmes ne permettent ni de prendre en compte l'accessibilité du réseau ni les interactions totales entre les loTs. Aussi, ces systèmes laissent place à un risque important d'impact sur la qualité de connectivité réseau et entre les interactions loTs, ce qui entraine donc un dysfonctionnement pour l'utilisateur voire une indisponibilité totale ou partielle pour l'utilisateur.

D'autres systèmes très spécifiques se sont développés notamment afin d'améliorer les performances des loTs lors des mises à jour. Par exemple le document WO2018063260 divulgue une technologie de type FOTA (pour *Firmware Over The Air en* terminologie anglo-saxonne) pour minimiser les ressources et le temps engagés lors des mises à jour en fonctionnant selon un mode PSM (pour Mode d'Economie d'Energie de l'IoT). Cependant, ces systèmes ou appareils ne prennent pas en considération l'ensemble des interactions d'un objet connecté et les performances réseaux. L'impact d'une mise à jour sera toujours perturbateur pour l'utilisateur et les services de l'objet connecté celui-ci étant en mode économie d'énergie pour favoriser la mise à jour. Le document D1:WO 2009/120597 A1 (QUALCOMM INC [US]; MANDYAM GIRIDHAR D [US] ET AL.) 1 octobre 2009 (2009-10-01)) concerne des procédés et un appareil de programmation de mise à jour du contenu d'un widget (composant d'interface graphique) mobile.

Ainsi, ces solutions ne prennent en considération ni les communications sur un réseau de communication ni l'environnement d'un objet connecté. Il existe donc un besoin pour de nouveaux procédés, dispositifs, système ou objets connectés pour optimiser les mises à jour d'un objet connecté.

### [Problème technique]

L'invention a donc pour but de remédier aux inconvénients de l'art antérieur. En particulier, l'invention a pour but de proposer un procédé d'optimisation de mise à jour d'objets connectés dans une infrastructure d'objets connectés, ledit procédé étant rapide et simple à mettre en œuvre, avec un nombre réduit d'étapes. Le procédé permet en particulier d'optimiser les mises à jour d'un objet connecté de façon à réduire la latence, éviter les saturations, prendre en compte et empêcher tout impact sur les interactions avec un dispositif tiers ou un utilisateur.

L'invention a en outre pour but de proposer un module applicatif destiné à optimiser les mises à jour d'un objet connecté, ledit module applicatif étant autonome et permettant de réduire la latence, éviter les saturations, prendre en compte et empêcher tout impact sur les interactions avec un dispositif tiers ou un utilisateur.

### [Brève description de l'invention]

A cet effet, l'invention porte sur **un procédé d'optimisation de mise à jour** d'objets connectés dans une infrastructure d'objets connectés comportant une pluralité de passerelles de connexion à des sous réseaux de transport de données pouvant présenter des normes de communication différentes, ladite infrastructure d'objets connectés comprenant au moins un objet connecté demandeur configuré pour accéder à au moins une passerelle de la pluralité des passerelles de connexion et au moins un module applicatif installé sur ledit objet connecté demandeur ;principalement caractérisé en ce que le procédé d'optimisation de mise à jour d'objets connectés comprend les étapes suivantes mise en œuvre par le module applicatif dudit objet connecté demandeur :
- Une étape de surveillance des données réseaux, comportant l'établissement d'un référentiel de communication,
- Une étape de surveillance des données usage utilisateurs, comportant l'établissement d'un référentiel usage utilisateurs de l'objet connecté demandeur,
- Une étape de surveillance des données usage tiers, comportant l'établissement d'un référentiel usage tiers de l'objet connecté demandeur,
- Une étape d'analyse des données réseaux, ladite analyse comprenant l'identification de périodes de temps de communication disponibles en fonction du référentiel de communication,
- Une étape d'analyse des données usage utilisateurs, ladite analyse comprenant l'identification de périodes de temps d'utilisation utilisateur disponibles de l'objet connecté demandeur en fonction du référentiel usage utilisateurs,
- Une étape d'analyse des données usage tiers, ladite analyse comprenant l'identification de périodes de temps d'utilisation tiers disponibles de l'objet connecté demandeur en fonction du référentiel usage tiers, et
- Une étape de détermination d'au moins un horaire de mise à jour pour l'objet connecté demandeur en fonction des périodes de temps de communication disponibles, des périodes de temps d'utilisation utilisateurs disponibles, des périodes de temps d'utilisation tiers disponibles.

Ce procédé permet en particulier d'optimiser les mises à jour d'un objet connecté demandeur en proposant au moins un horaire de mise à jour disponible. Cet horaire disponible prend en compte l'environnement de l'objet connecté demandeur, c'est-à-dire l'utilisation du réseau par les autres objets connectés et l'objet connecté demandeur mais également l'utilisation de l'objet connecté demandeur par un utilisateur et par un dispositif tiers. Le procédé permet d'éviter une indisponibilité totale ou partielle d'un objet connecté. En outre, le procédé permet de proposer un horaire le moins perturbateur pour un utilisateur. Par ailleurs, le procédé permet d'adapter l'horaire aux utilisations des objets connectés et également d'adapter l'horaire aux communications des objets connectés sur le réseau pour éviter une diminution des performances du réseau, latence et saturation.

Le procédé permet également d'optimiser les mises à jour en proposant un horaire selon lequel le réseau est le plus performant et avec la meilleure qualité de connectivité grâce aux données réseaux pour la mise à jour.

Ainsi, grâce au procédé selon l'invention, il est possible de réaliser une autoadaptation des mises à jour en fonction des données usage utilisateur et des données usage tiers, un désengorgement des réseaux et donc une réelle optimisation des mises à jour.

De façon avantageuse cela permet également une optimisation de la gestion des ressources d'un objet connecté pour une mise à jour dudit objet connecté.

En outre, le procédé permet d'utiliser au mieux les différents potentiels de communications des applications d'un même objet connecté. En effet, ceci permet à un objet connecté demandeur de pouvoir se connecter successivement à plusieurs sous-réseaux sans risque de perdre des données d'une part et d'augmenter la durée de fonctionnement des objets connectés grâce à une connexion ponctuelle d'autre part pour la mise à jour.

Il y a alors une diminution de la consommation, une stabilité augmentée des réseaux ainsi qu'un désengorgement desdits réseaux. Ainsi, le procédé s'inscrit dans une optimisation des mises à jour des objets connectés tout en augmentant la durée de vie des objets connectés et en réduisant leur consommation en ressource.

Par ailleurs, le procédé permet une amélioration de la sécurité dans les mises à jour. En effet, cette sécurité est augmentée par le fait que les mises à jour transitent par le module applicatif.

Ainsi, ce procédé permet en particulier d'optimiser les mises à jour des objets connectés en déterminant l'horaire où l'accès à Internet est le plus performant et où les interactions seront le moins perturbées également. Ainsi, l'invention permet de déterminer à quel moment une mise à jour peut être réalisée sans entrainer une indisponibilité de l'objet connecté et sans incidence sur les interactions dudit objet connecté avec d'autres objets connectés ou avec un utilisateur. Ce procédé permet de définir à quel moment un objet connecté peut être mis à jour sans entrainer son interruption ou son dysfonctionnement. En outre, le procédé selon l'invention permet de déterminer à quel moment les accès à Internet sont les plus performants pour réaliser la mise à jour de l'objet connecté ce qui permet de réduire la consommation en ressource et en temps. Le procédé selon l'invention permet également d'éviter tout incident ou perturbation lorsqu'un objet connecté est en cours d'utilisation.

Les inventeurs proposent donc une solution permettant de répondre aux enjeux actuels en proposant un procédé pouvant s'adapter à la diversité des objets connectés, pouvant couvrir l'ensemble des applications des objets connectés déployés, qu'ils soient ou non directement accessibles par un système centralisé, et optimisant les mises à jour des objets connectés sans perturber les interactions.

### Selon d'autres caractéristiques optionnelles du procédé, ce dernier peut inclure facultativement une ou plusieurs des caractéristiques suivantes, seules ou en combinaison :

- il comprend une étape de catégorisation de mise à jour, par le module applicatif. Cette catégorisation permet de classer les mises à jour. Cette catégorisation peut permettre d'ajuster l'horaire disponible pour la mise à jour de l'objet connecté en diminuant le risque d'indisponibilité de l'objet connecté pour un utilisateur ou un dispositif tiers tout en s'adaptant par exemple à la criticité de la mise à jour.
   En outre, certains réseaux de communication seront particulièrement adaptés à une certaine catégorie de mise à jour alors que d'autres seront plus adaptés à une autre catégorie de mise à jour (Fréquence vs Volume vs Urgence). Dans le cadre de l'invention, les données réseaux sont utilisées au mieux en fonction des caractéristiques des mises à jour contrairement aux procédés et systèmes antérieurs proposant un seul chemin ou routage prédéfini.
- il comprend une étape de priorisation des mises à jour, par le module applicatif, en fonction de règles de mise à jour de l'objet connecté demandeur. Ceci permet de définir un niveau de priorité pour chaque mise à jour. Cela permet d'optimiser l'utilisation de l'objet connecté demandeur par un dispositif tiers ou un utilisateur et de gérer de façon dynamique l'évolution de connectivité au réseau. Ainsi, la priorisation des mises à jour permet de réduire l'impact d'une mise à jour sur le fonctionnement de l'objet connecté, de ses capacité et services. En outre, cette priorisation permet également de désengorger le réseau.
- il comprend une étape de mise en file d'attente de la mise à jour, par le module applicatif. Ceci permet d'assurer la mise à jour lorsqu'aucun horaire n'est disponible. Ainsi, la mise à jour est gardée en mémoire ou stockée afin d'être réalisée à un horaire disponible. Ceci permet d'assurer le bon fonctionnement d'un objet connecté, ses utilisations, et d'éviter toute saturation du réseau. En outre, ceci permet une gestion améliorée des ressources de l'objet connecté. Ainsi, l'étape de mise en attente permet notamment de télécharger la mise à jour lors d'un horaire disponible du point de vue réseau et effectuer ultérieurement l'installation de la mise à jour lors d'un horaire optimal d'un point de vue utilisation de l'objet connecté.
- il comprend une étape de transmission d'une alerte, par le module applicatif lorsque les périodes de temps de communication disponibles et les périodes de temps d'utilisation disponibles ne comportent pas un horaire de mise à jour coïncidant. On entend par coïncidant au moins une partie de l'horaire de mise à jour commun aux différentes périodes de temps disponibles. Ainsi, ceci permet d'informer l'utilisateur ou un dispositif tiers qu'une mise à jour est présente et qu'aucun horaire commun n'est actuellement disponible. Ainsi, ceci permet de relativiser l'importance des utilisations de l'objet connecté ou de l'utilisation réseau vis-à-vis de la mise à jour. Ceci permet également une meilleure gestion des ressources de l'objet connecté mais également une meilleure gestion du réseau. Avantageusement, l'utilisateur ou le tier sera averti qu'une mise à jour est disponible est que celle-ci pourra présenter un risque d'impact sur un réseau ou sur l'objet connecté. Avantageusement, l'étape de mise en attente peut être mise en œuvre.
- Il comprend une étape de sélection, par l'objet connecté demandeur, d'un horaire optimal en fonction de l'au moins un horaire de mise à jour et de règles de mise à jour de l'objet connecté demandeur. Ceci permet avantageusement de sélectionner un créneau horaire optimal disponible durant lequel une indisponibilité totale ou partielle de l'objet connecté serait la moins perturbatrice pour un utilisateur et un dispositif tiers. Par ailleurs, la sélection par l'objet connecté permet au dit objet connecté d'élire le créneau horaire lui étant le mieux adapté en fonction de la mise à jour, ce qui se traduit à la fois par une diminution de la perturbation de l'utilisation de l'objet connecté, la diminution de la saturation réseau et la possibilité à l'objet connecté de choisir son créneau et donc d'opter pour les meilleures caractéristiques de communications. Avantageusement cette sélection permet également d'améliorer le désengorgement des réseaux de communication, d'éviter toute indisponibilité totale ou partielle d'un objet connecté et d'assurer une bonne gestion des ressources de l'objet connecté en fonction de la mise à jour à réaliser.
- Il comprend une étape de classement, par le module applicatif, des périodes de temps d'utilisation utilisateurs disponibles et des périodes de temps d'utilisation tiers disponibles. De préférence l'étape de classement est fonction des données usages utilisateurs et des données usages tiers analysées de l'objet connecté demandeur. Ce classement permet à l'objet connecté de trier les utilisations de l'objet connecté demandeur. Ceci peut avantageusement permettre à l'objet connecté demandeur d'élire des périodes de temps disponibles en fonction de ses utilisations. Ceci permet d'améliorer la disponibilité de l'objet connecté en fonctions des périodes de temps disponible et des utilisations de l'objet connecté demandeur. Ainsi, le procédé assure la réduction d'indisponibilité totale ou partielle de l'objet connecté pour un utilisateur ou un dispositif tiers.

D'autres mises en oeuvre de cet aspect de l'invention comprennent aussi des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment d'un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

L'invention porte en outre sur un **module applicatif** pour l'optimisation de mise à jour d'objets connectés dans une infrastructure d'objets connectés comportant une pluralité de passerelles de connexion à des sous réseaux de transport de données pouvant présenter des normes de communication différentes, ladite infrastructure d'objets connectés comprenant au moins un objet connecté demandeur sur lequel est installé ledit module applicatif, ledit objet connecté demandeur étant apte à accéder à au moins une passerelle de la pluralité des passerelles de connexion, ledit module applicatif étant configuré pour :
- surveiller des données réseaux, afin d'établir un référentiel de communication,
- surveiller des données d'usage utilisateurs, afin d'établir un référentiel usage utilisateurs de l'objet connecté demandeur,
- surveiller des données usage tiers, afin d'établir un référentiel usage tiers de l'objet connecté demandeur,
- analyser les données réseaux comprenant l'identification de périodes de temps de communication disponibles en fonction du référentiel de communication,
- analyser les données d'usage utilisateurs comprenant l'identification de périodes de temps d'utilisation utilisateurs disponibles de l'objet connecté demandeur en fonction du référentiel usage utilisateurs,
- analyser les données d'usage tiers comprenant l'identification de périodes de temps d'utilisation tiers disponibles de l'objet connecté demandeur en fonction du référentiel usage tiers, et
- déterminer au moins un horaire de mise à jour pour l'objet connecté demandeur en fonction des périodes de temps de communication disponibles, des périodes de temps d'utilisation utilisateurs disponibles, des périodes de temps d'utilisation tiers disponibles.

Le module applicatif permet d'optimiser les mises à jour des objets connectés. En effet, le module applicatif permet de déterminer un horaire pour la mise à jour d'un objet connecté. Ceci permet donc d'améliorer les mises à jour des objets connectés, de désengorger les réseaux de communication, de diminuer l'impact d'une mise à jour sur les fonctionnalités et services de l'objet connecté. Le module applicatif permet également d'éviter toute indisponibilité totale ou partielle de l'objet connecté pour un utilisateur ou un tiers à cause d'une mise à jour.

En outre, le module applicatif permet d'optimiser les mises à jour de l'objet connecté de façon autonome, en effet grâce au module applicatif, il n'est plus nécessaire de déployer plusieurs dispositifs informatiques sur les réseaux de communication ou dans les architectures, de déterminer des nœuds maîtres, des centralisateurs ou encore des organisateurs/décideurs. Grâce au module applicatif, l'objet connecté peut réaliser sa mise à jour à un horaire optimal. Ceci permet également, un gain de temps mais aussi une diminution des ressources par diminution des moyens à mettre en place.

En outre, le module applicatif permet une meilleure organisation des mises à jour, celles-ci étant réalisée selon un horaire, lesdites mises à jour ne sont plus mises en œuvre de façon anarchiques privant un utilisateur ou un dispositif tiers des services et fonctionnalités de l'objet connecté de façon inopportune. Il y a alors une diminution de la consommation des ressources de l'objet connecté, une stabilité augmentée des réseaux ainsi qu'un désengorgement desdits réseaux. Ainsi, le module applicatif s'inscrit dans une optimisation des mises à jour des objets connectés tout en augmentant la durée de vie des objets connectés, et en diminuant la consommation en énergie.

En outre, le module applicatif permet de décharger l'objet connecté des données de mise à jour. En effet, le nombre de données échangées par un objet connecté ne faisant qu'augmenter au cours du temps (i.e des années), le module applicatif permet de soulager l'objet connecté pour les données réseaux, les données d'utilisations utilisateurs et tiers. Le module applicatif permet également de réduire les files d'attentes de communication pouvant s'établir lorsqu'une mise à jour est en cours, en effet, ladite mise à jour étant réalisée grâce au module applicatif selon un horaire où des périodes de temps disponibles ont été identifiées.

Ainsi, le module applicatif s'inscrit dans une optimisation des mises à jour des objets connectés.

L'invention porte en outre sur **un système d'optimisation 10 de mise à jour** d'objets connectés dans une infrastructure d'objets connectés comportant une pluralité de passerelles de connexion à des sous réseaux de transport de données pouvant présenter des normes de communication différentes, ledit système d'optimisation de mise à jour comprenant au moins un objet connecté demandeur configuré pour accéder à au moins une passerelle de la pluralité des passerelles de connexion et au moins un module applicatif selon l'invention installé sur ledit objet connecté.

Un tel système permet d'optimiser les mises à jour d'un objet connecté. En outre un tel système permet d'éviter la saturation de réseau de communication. De plus, il permet également d'éviter toute indisponibilité totale ou partielle de l'objet connecté et donc d'assurer une continuité des services et fonctionnalités des objets connectés pour un utilisateur et/ou un tiers. Ainsi, un tel système permet de programmer les mises à jour dans des horaires optimums en termes de connectivité réseau, d'impact sur les interactions entre objets connectés et d'impact entre objets connectés et utilisateurs.

L'invention porte en outre sur **un objet connecté** comprenant un module applicatif selon l'invention pour l'optimisation de mise à jour de l'objet connecté dans une infrastructure d'objets connectés.

L'invention porte également sur **un programme informatique** pour l'optimisation de mise à jour d'objets connectés dans une infrastructure d'objets connectés, comportant des instructions de code de programme pour la mise en œuvre d'un procédé selon l'invention lorsque ledit programme est exécuté sur un dispositif informatique.

D'autres avantages et caractéristiques de l'invention apparaitront à la lecture de la description suivante donnée à titre d'exemple illustratif et non limitatif, en référence aux Figures annexées :
[Fig 1] La figure 1 représente un schéma d'un système selon un mode de réalisation de l'invention.
[Fig 2] La figure 2 représente un mode de réalisation du procédé selon l'invention.
Les figures 3A à 3C représentent les différentes étapes d'un procédé selon un mode de réalisation de l'invention, les étapes en pointillées étant facultatives avec notamment

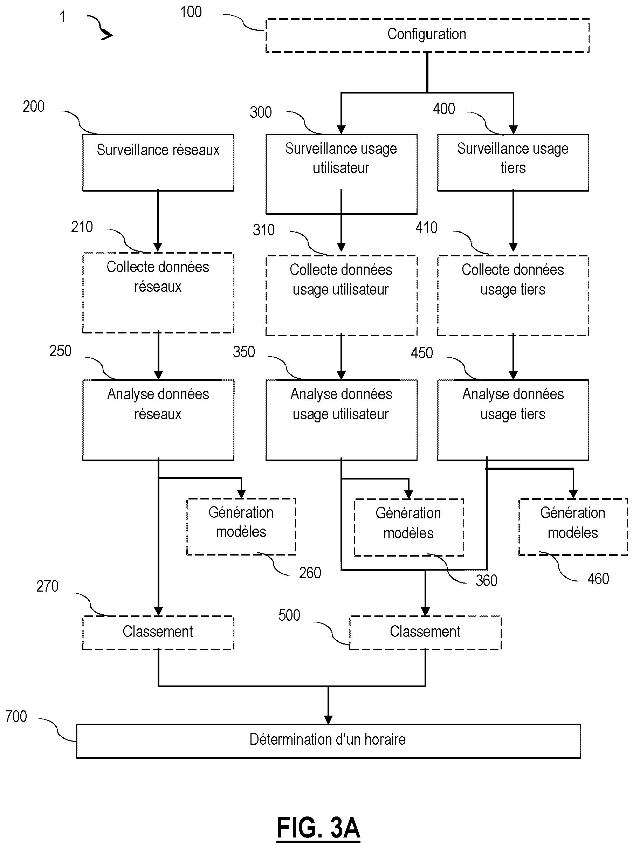

   [Fig 3A] un mode de réalisation des étapes de surveillance d'analyse,

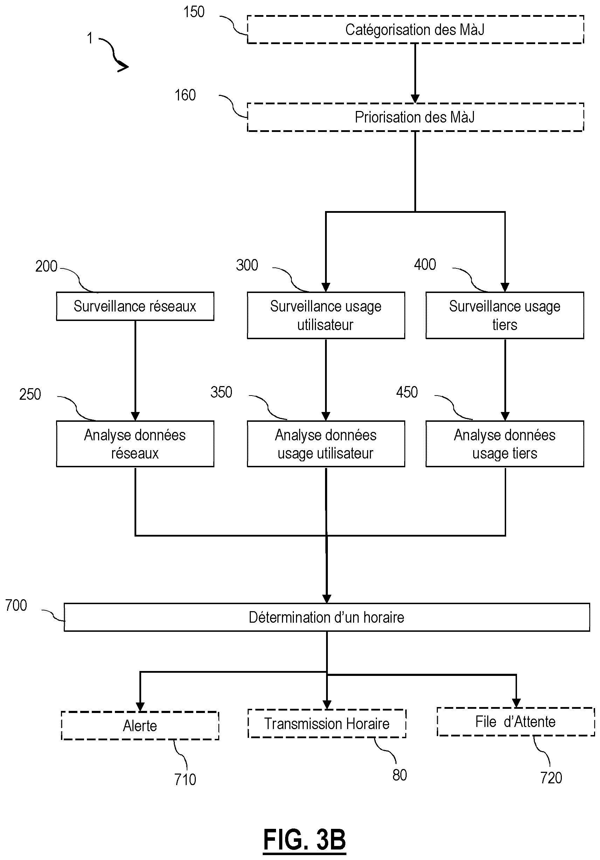

   [Fig 3B] un mode de réalisation des étapes préalables à la mise en œuvre du procédé et postérieure à la détermination d'un horaire,

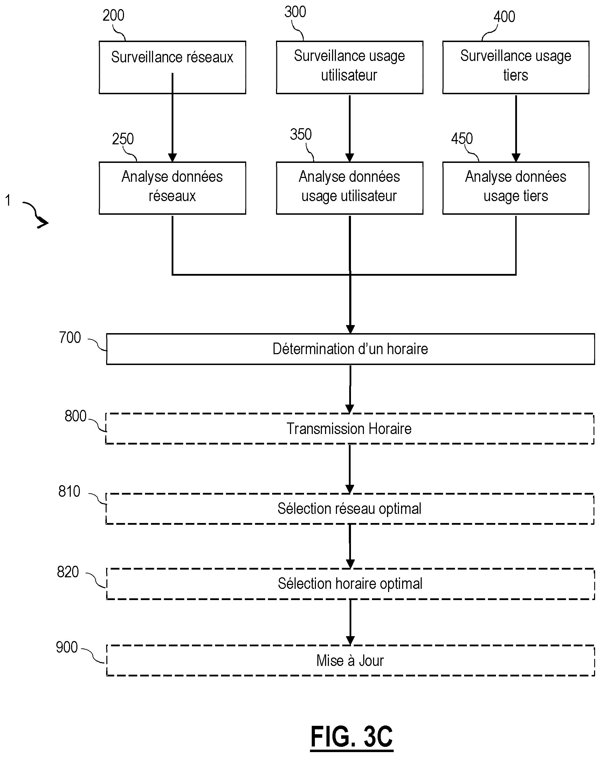

   [Fig 3C] un mode de réalisation des étapes postérieures à la détermination d'un horaire.

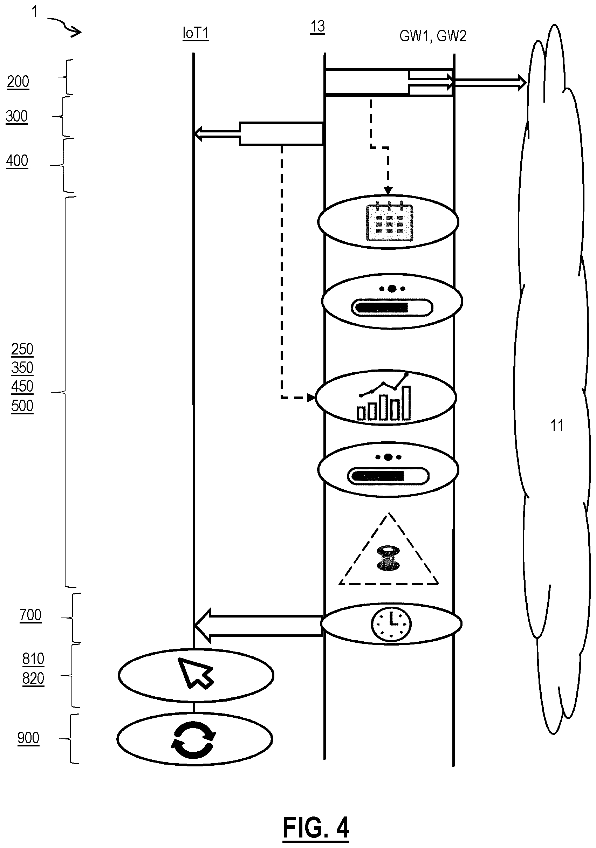

[Fig 4] La figure 4 représente un schéma d'un procédé selon un autre mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

Ainsi, comme cela sera apprécié par l'homme de l'art, des aspects de la présente invention peuvent être réalisés en tant que dispositif, système, procédé ou produit de programme d'ordinateur. En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur l'ordinateur d'un utilisateur, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en œuvre l'invention.

### [Description de l'invention]

Dans la suite de la description, l'expression « **optimisation de mise à jour »** correspond à la démarche permettant d'améliorer, maximiser et favoriser une mise à jour.

Le terme « **infrastructure d'objet connecté** » au sens de l'invention correspond à un ensemble d'objets connectés apte à communiquer ensemble au travers d'un réseau de communication comprenant une pluralité de passerelles de connexion à des sous réseaux de transport de données pouvant présenter des normes de communication différentes.

Un « **objet connecté** » au sens de l'invention correspond à un dispositif informatique ou système électronique connecté, de préférence sans fil, à un réseau et pouvant partager des informations avec un serveur, un ordinateur, une tablette électronique, un smartphone ou tout autre appareil électronique.

On entend par « **module** » comme par exemple « module applicatif » tout agencement matériel et logiciel apte à permettre l'exécution d'instructions.

On entend par « **période de temps** » au sens de l'invention une plage horaire, pouvant être définie en secondes, minutes, heures ou date et comprenant un indicateur de début et de fin ou un indicateur de début ou de fin accompagné d'une durée

On entend par « **période de temps disponible** » au sens de l'invention une période de temps présentant l'espace-temps le plus libre, le moins en activité.

On entend par « **horaire** » au sens de l'invention un espace-temps, limité dans le temps entre deux instants. Un horaire peut correspondre à un ou plusieurs jours, une ou plusieurs semaines, un ou plusieurs mois, une ou plusieurs années, mais aussi à des périodes plus courtes telles qu'une ou plusieurs heures, une ou plusieurs minutes, une ou plusieurs secondes. De préférence un créneau horaire comprend un indicateur de début et de fin accompagné d'une durée ou bien une plage horaire comprend un indicateur de début ou de fin, l'indicateur étant accompagné d'une durée.

On entend par « **horaire optimal** » au sens de l'invention un horaire présentant le meilleur espace-temps pour réaliser une mise à jour d'un objet connecté.

On entend par « **priorisation** » un ordonnancement croissant P1 à Pn selon des caractéristiques ou paramètres tels que le type de connectivité, le coût du transport, l'indice de qualité de la connectivité et/ou le niveau de sécurité, pour calculer une valeur de priorité qui correspond à un niveau de priorité. Par exemple pour des passerelles de connexion, si P2>P1 alors la passerelle ayant un niveau de priorité P2 sera prioritaire sur la passerelle ayant un niveau de priorité P1.

On entend par « **réseaux** » au sens de l'invention un réseau de communication, un sous-réseau, un réseau local, un réseau entreprise ou encore un réseau tel qu'Internet et auxquels sont connectés des objets connectés. Il peut s'agir de réseau étendu, à haut débit, utilisant un protocole de transport fiable en mode connecté, comme par exemple le protocole TCP/IP (TCP ou « Transmission Control Protocol » étant un protocole de couche 4 du modèle OSI ou « Open Systems Interconnection » selon une terminologie anglo-saxonne, sur IP qui est un protocole de la couche 3 du modèle OSI). Le protocole TCP/IP est documenté dans la RFC 7931 de l'IETF (« Internet Engineering Task Force » selon une terminologie anglo-saxonne). Il peut s'agir par exemple d'un réseau Internet.

On entend par « **référentiel de communication** » au sens de l'invention un référentiel permettant de référencer les communications sur un réseau de communication. Il peut en particulier comporter une cartographie des connexions de chaque objet connecté au réseau de communication, de préférence traversant les différentes passerelles et cela en fonction du temps. Ainsi, à partir d'un tel référentiel il est possible d'obtenir plusieurs périodes de temps de disponibilité réseau, durant lesquelles certains échanges de données, en l'occurrence de mise à jour) sont le plus propice.

On entend par « **référentiel utilisation** » au sens de l'invention un référentiel permettant de référencer les périodes de temps d'utilisation d'un objet connecté et/ou de ses applications. Il peut en particulier comporter une cartographie de l'utilisation de chaque objet connecté, que cette utilisation soit humaine par un utilisateur ou virtuelle par un autre objet connecté ou composant informatique tiers. Ainsi, à partir d'un tel référentiel utilisation il est possible d'obtenir une ou plusieurs périodes de temps durant lesquelles certains échanges de données ou communications sont le plus propices.

On entend par « **passerelle de connexion** » au sens de l'invention, un équipement assurant la connexion entre des équipements appartenant à des réseaux différents, par exemple assurant la connexion des équipements d'un réseau local (adresses IP locales, pour « Internet Protocol » selon une terminologie anglo-saxonne) et des services internet (adresses IP publiques). De ce fait, une telle passerelle possède les deux types d'adresses IP. Son adresse IP publique, attribuée par le fournisseur d'accès internet, plus communément désigné par l'acronyme « FAI », lui permet d'échanger les données avec le réseau Internet. Son adresse IP locale lui permet d'échanger des données avec les équipements du réseau local. Elle est généralement spécifique et attribuée par défaut par le FAI.

Le terme « **motif** » au sens de l'invention correspond à une pluralité de valeurs par exemple sous la forme d'un groupe de données correspondant à un instant précis pour différents paramètres ou sous la forme d'une séquence de valeurs pour un ou plusieurs paramètres pouvant correspondre à un intervalle temporel.

On entend par « **traiter** », « **calculer** », « **déterminer** », « **afficher** », « **extraire** » « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, tel qu'un ordinateur, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments. En outre, les différentes caractéristiques présentées et/ou revendiquées peuvent être avantageusement combinées. Leur présence dans la description ou dans des revendications dépendantes différentes, n'excluent pas cette possibilité.

Les objets de notre quotidien ou de nos industries sont de plus en plus souvent connectés et aptes à échanger des données avec d'autres dispositifs. En outre, il existe de plus en plus d'objets connectés et d'applications d'objet connecté qui présentent une grande diversité et variabilité. Ainsi, les mises à jour de ces objets connectés et des applications d'objets connectés ne cessent de croître au regard de l'augmentation du nombre et des fonctionnalités et services des dits objets connectés. Toutefois, les mises à jour entrainent généralement une indisponibilité totale ou partielle des objets connectés ce qui impacte fortement les utilisateurs et les dispositifs tiers. De plus, ces mises à jour prennent place de façon fortuite ce qui a pour conséquence outre l'impact sur les utilisateurs (humain et tiers) impacte également les réseaux et plus particulièrement les capacités de connectivité. Ces mises à jour sont donc pour la plupart anarchique sur les réseaux et pour les utilisateurs ce qui entraine des saturations réseaux, des indisponibilités totales ou partielles des objets connectés et des applications, des perturbations de services et fonctionnalités. De plus, ces mises à jour entrainent en parallèle une consommation des ressources de l'objet connecté qui se trouve dans l'obligation d'allouer une partie de ses ressources à la mise en œuvre de la mise à jour privant alors l'objet connecté de ressources pour son fonctionnement et cela de façon imprévue. Enfin, l'augmentation du nombre d'objets connectés et des applications d'objets connectés se traduit également par une diversification des protocoles de communications propre à chaque objet connecté ou application. Cette diversité complexifie d'autant plus les communications et donc les protocoles des mises à jour.

Or aujourd'hui, il n'existe pas de solution permettant d'optimiser les mises à jour des objets connectés et de leurs applications en prenant en compte d'une part les performances du réseau et d'autre part l'environnement de l'objet connecté.

Ainsi, les inventeurs ont développé une nouvelle solution d'optimisation de mise à jour d'objets connectés IoT1,IoT2,IoT3 dans une infrastructure d'objets connectés comportant une pluralité de passerelles de connexion GW1,GW2 à des sous réseaux 11,12 de transport de données pouvant présenter des normes de communication différentes en considérant l'ensemble des communications sur un réseau de communication, ses performances ainsi que les utilisations des objets connectés qui sont impactés par les mises à jour.

Ainsi selon un premier aspect, l'invention porte sur **un procédé 1 d'optimisation de mise à jour** d'objets connectés IoT1,IoT2,IoT3 dans une infrastructure d'objets connectés comportant une pluralité de passerelles de connexion GW1,GW2 à des sous réseaux 11,12 de transport de données pouvant présenter des normes de communication différentes. Les réseaux de communication peuvent être un réseau local, un réseau distant, un réseau interne, un réseau entreprise ou encore un réseau particulier.

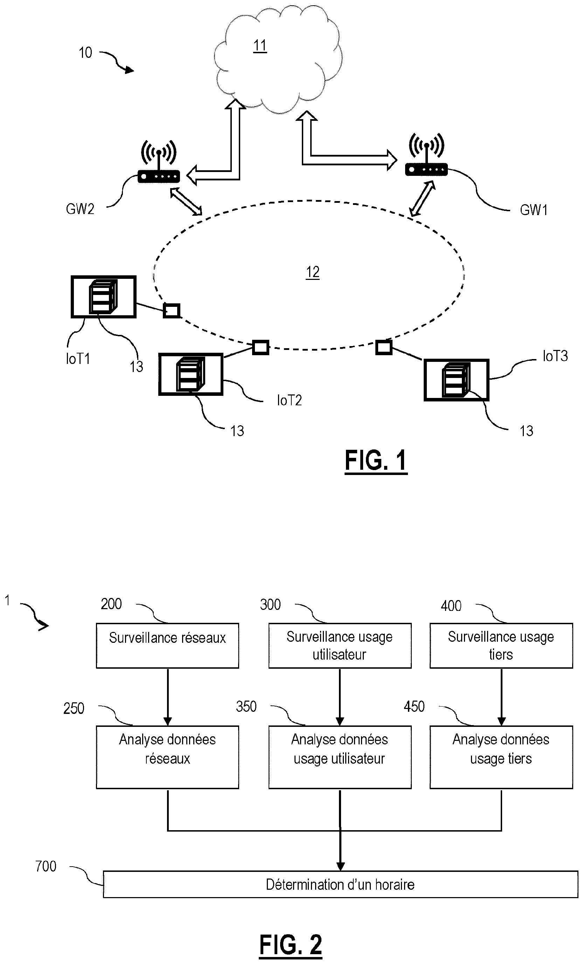

Comme présenté à la **figure 1**, l'infrastructure comprend une pluralité d'objets connectés au travers d'un réseau de communication tels que les sous-réseaux 11,12. L'infrastructure d'objets connectés comprend donc au moins un objet connecté IoT1,IoT2, IoT3 demandeur. L'au moins un objet connecté demandeur comprend un module applicatif 13, installé de préférence sur ledit objet connecté demandeur. De préférence le module applicatif 13 est configuré pour permettre à l'objet connecté demandeur d'établir une liaison de communication au travers des réseaux de communication tels que les sous-réseau 11,12.

En outre, les objets connectés comprennent une ou plusieurs applications. Les applications peuvent correspondre à des moyens permettant de fournir un ou plusieurs services à un utilisateur ou à n'importe quel autre dispositif informatique tiers.

Il est à noter que l'invention ne se limite pas à ce mode de réalisation, et qu'il serait aisé pour l'homme du métier de comprendre que l'invention peut comprendre un ou plusieurs réseaux de communication, un ou plusieurs objets connectés comprenant chacun une ou plusieurs applications, un ou plusieurs modules applicatifs. Ainsi l'invention n'est pas limitée par son architecture ni par son agencement.

Comme cela est illustré **à la** **figure 2**, un procédé d'optimisation de mise à jour selon l'invention comprend une étape de surveillance 200 des données réseaux, une étape de surveillance 300 des données usage utilisateurs, une étape de surveillance 400 des données usage tiers, une étape d'analyse 250 des données réseaux, une étape d'analyse 350 des données usage utilisateurs, une étape d'analyse 450 de données usage tiers, une étape de détermination 700 d'au moins un horaire de mise à jour.

Avantageusement, comme illustré **aux** **figures 3A à 3C**, le procédé d'optimisation de mise à jour peut comprendre une étape de configuration 100, une étape de catégorisation 150 de mise à jour, une étape de priorisation 160 des mises à jour, des étapes de classement 270,500 des périodes de temps, une étape de mise en file d'attente 720 de la mise à jour, une étape de transmission 710 d'une alerte, une étape de sélection 820 d'un horaire optimal.

Ainsi le procédé d'optimisation de mise à jour peut comporter **une étape de configuration 100.** Cette étape peut être mise en œuvre par un utilisateur. Cette étape de configuration comprend notamment la définition préalable à la réalisation du procédé, d'indicateurs pertinents. Ces indicateurs pertinents peuvent être définis pour la surveillance des données, de préférence des données usages utilisateurs et des données usages tiers. Ainsi, la configuration permet de définir des indicateurs pertinents pour la surveillance de données afin de paramétrer les données à surveiller. Avantageusement, la configuration permet d'éviter de surcharger l'objet connecté et le module applicatif lors de la collecte de données. En effet, grâce à la configuration d'indicateurs pertinents, seules les données nécessaires seront surveillées et collectées. De plus, la configuration permet d'assurer des indicateurs pertinents pour l'établissement de référentiels, de préférence du référentiel usage utilisateur et référentiel usage tiers.

Par exemple il peut s'agir d'indicateur sur les volumes entrants, les volumes sortants, les durées d'utilisations par un utilisateur ou un tiers, les périodes d'utilisations par un utilisateur ou un tiers, la largeur de bande disponible, de consommation en CPU, mémoires, espaces disque, identifiant utilisateur ou tiers.

Avantageusement, les indicateurs pertinents peuvent être différenciés selon l'utilisation des utilisateurs et les utilisations tiers. En outre, les indicateurs pertinents peuvent être mémorisés sur une base de données du module applicatif installé (i.e. embarqué) sur l'objet connecté.

En parallèle de l'étape de configuration, le procédé peut comprendre **une étape de catégorisation** 150 des mises à jour. Cette étape peut être mise en œuvre par le module applicatif. La catégorisation des mises à jour permet de trier les mises à jour en fonction des paramètres de mise à jour par exemple de leur nature, de leur type, de leurs caractéristiques. Par exemple il peut s'agir d'une catégorisation en fonction d'une mise à jour de sécurité, de fonctionnement, d'amélioration. Il peut également s'agir d'une catégorisation en fonction du temps nécessaire au téléchargement de la mise à jour, à son installation, à son poids. En outre, la catégorisation peut également comprendre le tri des mises à jour en fonction de l'indisponibilité que celle-ci peut entrainer de l'objet connecté, une indisponibilité totale, partielle, un redémarrage ou non de l'objet connecté, ou encore une dépendance de la mise à jour avec un autre système ou dispositif informatique.

Le procédé peut comprendre une étape de priorisation 160 des mises à jour. Cette étape peut être mise en oeuvre par le module applicatif. L'étape de priorisation peut comprendre une fonction de priorisation afin de hiérarchiser les mises à jour. Ainsi l'étape de priorisation permet de classer les mises à jour selon une organisation prédéterminée. Avantageusement, la priorisation peut être fonction de la catégorisation des mises à jour.

En particulier l'étape de priorisation peut comprendre l'exécution par le module applicatif d'au moins une fonction de priorisation. Ceci permet de calculer des niveaux de priorité pour chaque mise à jour. Cette au moins une fonction de priorisation permet de calculer plusieurs niveaux de priorité pour chacune des mises à jour.

En particulier, l'étape de priorisation peut comporter l'exécution d'une fonction de priorisation par catégorie de mise à jour afin de définir des niveaux de priorité par catégorie de mise à jour. Ces niveaux de priorité par catégorie de mise à jour peuvent être mémorisés sur la base de données du module applicatif.

De façon préférée, l'étape de priorisation peut comporter l'exécution d'une fonction de priorisation par catégorie de mise à jour comprenant l'exécution par le module applicatif d'au moins une fonction de priorisation pour calculer des niveaux de priorité pour chaque catégorie de mise à jour à partir des paramètres de chaque mise à jour. Ces paramètres peuvent également comprendre l'importancede la mise à jour, l'urgence de la mise à jour, la date à partir de laquelle l'absence de mise à jour entrainera un dysfonctionnement de l'objet connecté.

Avantageusement, l'étape de priorisation peut comprendre la transmission d'une demande d'arbitrage auprès d'un utilisateur. Cela permet lors de mise à jour critique pouvant impacter l'utilisation par un utilisateur ou un tiers d'informer l'utilisateur qui pourra alors valider ou infirmer la priorisation. Ceci permet d'autant plus d'éviter tout impact négatif sur l'utilisation d'un objet connecté par un utilisateur ou un tiers. Par exemple certaines mises à jour pourraient bénéficier d'une priorité pour passer outre les utilisations d'un utilisateur ou d'un tiers. En outre, certaines mises à jour pourraient bénéficier en fonction de leur catégorie et de leur priorité d'un accès réseau spécifique. Par exemple, en fonction des caractéristiques des passerelles de connexion. Ainsi, selon un exemple, une mise à jour prioritaire de type sécurité (relativement lourde) pourrait bénéficier de passerelle de connexion présentant des caractéristiques de connectivité les plus adaptés et dont le réseau sera le plus disponible.

Le procédé selon l'invention peut comprendre **une étape de surveillance 200 des données réseaux.** Cette étape peut être mise en œuvre par le module applicatif 13.

L'étape de surveillance réseau permet de cartographier les communications sur les réseaux. En outre, la surveillance des données réseaux permet de surveiller l'activité sur les réseaux. Ainsi, il est possible de disposer à tout moment de l'activité en cours sur un réseau.

L'étape de surveillance des données réseaux peut comporter l'établissement d'un référentiel de communications. Ce référentiel permet de mémoriser l'activité sur les réseaux. Ainsi le module applicatif peut déterminer quelles sont les plages horaires les plus sollicitées ou au contraire les moins sollicitées.

De façon avantageuse, l'étape de surveillance réseau est réalisée en continue par module applicatif. La surveillance en continue permet ainsi une cartographie complète et totale des réseaux et de leur activité.

Il est à noter que la surveillance des données réseaux peut se faire par exemple par la surveillance des données réseaux comprenant la consommation en bande d'utilisation réseau, de la connectivité réseau, volume entrant, volume sortant. De façon avantageuse, la surveillance des données réseaux peut également comprendre la surveillance des durées de communication ou d'activité des réseaux, la disponibilité du réseau, les historiques des événements, les temps de réponse, le trafic des applications, la charge de service, le trafic réseau, le nombre d'utilisateurs, etc...

Ainsi, les données réseaux peuvent comprendre des données propres au réseau.

Par exemple, ces données peuvent correspondre à une valeur de consommation en bande passante, volume entrant, volume sortant, durée de communication.

Avantageusement, les données réseaux peuvent également comprendre des données de connectivité des passerelles de connexion. Dans un exemple de mise en œuvre non limitatif d'un procédé conforme à l'invention, les paramètres de connectivité, propres à chaque passerelle qui sont pris en compte peuvent notamment comprendre de manière non limitative :
- un type de connectivité, par exemple le fait qu'il s'agisse d'un réseau filaire, d'un réseau 3G ou 4G-LTE, d'un réseau à courte portée du type Wi-Fi ou Bluetooth, etc. ; un coût de transport des données par unité de données, exprimé par exemple par Kilooctet de données transportées ;
- un indice de sécurisation de la transmission,
- un indice de qualité de la connectivité, par exemple un taux moyen d'erreur sur les bits, un temps de latence constaté, et/ou
- un débit de transmission associé à la passerelle considérée ,
- un indice de disponibilité des passerelles de connexion,
- un indice de flux passant sur la passerelle,
- un identifiant de la passerelle.

De façon avantageuse, la surveillance de données réseaux peut comprendre **une étape de collecte 210 des données réseaux**.

De préférence, l'étape de collecte 210 des données réseaux est mise en œuvre au cours du temps par des sondes. La ou les sondes permettent par exemple de collecter des données réseaux telles que divulguées ci-dessus.

Ces mesures peuvent par exemple être réalisées à partir de sonde. Il existe de nombreux types de sondes, et l'homme du métier sera en capacité de déterminer quel type de sonde pourra faire remonter vers le module applicatif des mesures ou des valeurs. Ainsi, à titre d'exemple il peut s'agir de toute instruction exécutable capable de fournir des valeurs. Par ailleurs les langages de programmation supportés peuvent être multiples et variés.

Ces sondes peuvent être associées à chaque donnée pour remonter les informations représentant par exemple l'activité réseau. La ou les sondes peuvent suivre en continu ou à des intervalles configurables les données réseaux de façon à obtenir des informations par type de donnée en fonction du temps. Le suivi en continu correspond par exemple à des mesures réalisées à une fréquence inférieure ou égale à une heure, de préférence inférieure ou égale à trente minutes, de façon plus préférée inférieure ou égale à cinq minutes, par exemple inférieure ou égale à dix secondes. A noter que toutes les données ne seront pas nécessairement mesurées à une fréquence identique. Ces données et informations peuvent être stockées dans une mémoire.

Dans certains modes de réalisation, une interface homme-machine permet de définir les sondes sur chaque machine qui remontent les données réseaux vers le module applicatif.

En outre, l'étape de surveillance réseau peut comprendre **une étape d'identification de communications récurrentes**. Afin de déterminer une communication récurrente, celle-ci peut être prédéfinie. Ainsi, la définition d'une communication récurrente peut être préalablement mémorisée sur le dispositif de communication de telle sorte que le dispositif de communication, lors de la surveillance identifie des communications selon des règles de récurrences préétablies. Par exemple, il peut s'agir d'une activité se répétant tous les jours, toutes les heures ou selon une plage horaire, une série temporelle. Par exemple, la consommation en bande d'utilisation réseau est plus importante un certain jour selon une certaine plage horaire de façon répétitive. De même ; il peut s'agir d'une faible consommation en bande d'utilisation réseau mais cette consommation est répétée toutes les heures sur le réseau de communication.

Par ailleurs, les communications récurrentes pourront correspondre à un ou plusieurs seuils relatifs à des paramètres du réseau en fonction du temps à un instant ponctuel ou en fonction de plage horaire. Dans ce cas, le procédé selon l'invention pourra comporter au préalable, une étape de détermination de seuil et de mémorisation desdits seuils. Les seuils pourront par exemple correspondre à des valeurs minimales et/ou maximales de pourcentage d'utilisation du réseau de communication dans le temps. Les seuils peuvent être inscrits dans un fichier de configuration.

Avantageusement, les communications récurrentes pourront également correspondre à des motifs de communication d'un réseau. Dans ce cas, le procédé selon l'invention pourra comporter au préalable, une étape de **détermination de motifs** et de mémorisation desdits motifs. Ainsi, l'identification de communications récurrentes peut également comprendre l'identification de motifs correspondant à des communications récurrentes sur le réseau. Par ailleurs, la détermination de motifs permet de faciliter l'identification de communication récurrente et donc par conséquence la surveillance des données réseaux.

Avantageusement, lorsqu'une communication récurrente est identifiée, le procédé selon l'invention peut comprendre son identification au moyen d'un identifiant

En parallèle de la surveillance des données réseaux, le procédé selon l'invention peut comprendre **une étape de surveillance 300 des données usage utilisateur.**

L'étape de surveillance des données usage utilisateur permet de cartographier les utilisations de l'objet connecté et de préférence de l'objet connecté demandeur. De façon particulièrement avantageuse, l'étape de surveillance des données usage utilisateur peut comprendre la surveillance des sollicitations de l'objet connecté un ou plusieurs utilisateurs, telle que par exemple la saisonnalité, la durée d'utilisation. Ainsi, il est possible de disposer à tout moment de l'utilisation de l'objet connecté par un utilisateur. Il est à noter que la surveillance des données usage utilisateur peut se faire par exemple par la surveillance de la consommation en bande passante, du volume entrant, du volume sortant. De façon avantageuse, la surveillance des données usage utilisateur peut également comprendre la surveillance des durées d'utilisation de l'objet connecté.

L'étape de surveillance des données usage utilisateur peut comporter l'établissement d'un référentiel usage utilisateur, de préférence de l'objet connecté demandeur. Ce référentiel permet de mémoriser l'activité et l'utilisation de l'objet connecté par un ou plusieurs utilisateurs. Ainsi le module applicatif peut déterminer quelles sont les horaires les plus sollicités ou au contraire les moins sollicités.

De façon avantageuse, l'étape de surveillance des données usage utilisateur est réalisée en continue par le module applicatif. La surveillance en continue permet ainsi une cartographie complète et totale de l'utilisation de l'objet connecté.

Avantageusement, l'étape de surveillance des données usage utilisateur peut comprendre **une étape de collecte 310 des données usage utilisateurs.** Cette collecte est mise en œuvre au cours du temps par des sondes. La ou les sondes permettent par exemple de collecter des données usage utilisateurs telles que divulguées ci-dessus. Ces mesures peuvent par exemple être réalisées à partir de sonde. Il existe de nombreux types de sondes, et l'homme du métier sera en capacité de déterminer quel type de sonde pourra faire remonter vers un équipement informatique des mesures ou des valeurs. Ainsi, à titre d'exemple il peut s'agir de toute instruction exécutable capable de fournir des valeurs telle qu'une sonde de type « Dynatrace », « AppDynamics », « Nigel's Monitor » (Nmon) ou « Performance Monitor » (Perfmon). Par ailleurs les langages de programmation supportés peuvent être multiples et variés. Les sondes « Dynatrace » ou « Appdynamics » permettent par exemple l'accès à des données pertinentes sur l'état d'une application. Ceci est particulièrement avantageux pour prendre en compte la consommation en ressource par exemple de l'objet connecté demandeur. Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique et plus particulièrement d'une chaine applicative. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes peuvent être associées à chaque donnée (e.g. temps de réponse, ressource ou fonctionnalités) pour remonter les informations représentant par exemple l'utilisation de l'objet connecté demandeur par un ou plusieurs utilisateurs. La ou les sondes peuvent suivre en continu ou à des intervalles configurables les données de façon à obtenir des informations par type de donnée en fonction du temps. Le suivi en continu correspond par exemple à des mesures réalisées à une fréquence inférieure ou égale à une heure, de préférence inférieure ou égale à trente minutes, de façon plus préférée inférieure ou égale à cinq minutes, par exemple inférieure ou égale à dix secondes. A noter que toutes les données ne seront pas nécessairement mesurées à une fréquence identique. Ces données et informations peuvent être stockées dans une mémoire.

Une interface homme-machine peut également être prévue.

En outre, l'étape de surveillance des données usage utilisateur peut comprendre **une étape d'identification des utilisations récurrentes**. Au même titre que lors de la surveillance des données réseaux, afin de déterminer une utilisation récurrente, celle-ci peut être prédéfinie. Ainsi, la définition d'une utilisation récurrente peut être préalablement mémorisée par le module applicatif, de préférence par la base de données du module applicatif. Le module applicatif peut alors être configuré pour lors de la surveillance identifier des utilisations récurrentes selon des règles préétablies.

Par ailleurs, les utilisations récurrentes pourront correspondre à un ou plusieurs seuils relatifs à des paramètres d'utilisation d'un objet connecté en fonction du temps à un instant ponctuel ou en fonction de créneau horaire. Dans ce cas, le procédé selon l'invention pourra comporter au préalable, une étape de détermination de seuil et de mémorisation desdits seuils.

Avantageusement, les utilisations récurrentes pourront également correspondre à des motifs d'utilisation récurrente d'un objet connecté par un ou plusieurs utilisateurs. Dans ce cas, le procédé selon l'invention pourra comporter au préalable, une étape de **détermination de motifs** et de mémorisation desdits motifs. Ainsi, l'identification d'utilisations récurrentes peut également comprendre l'identification de motifs correspondant à des utilisations récurrentes de l'objet connecté. Par ailleurs, la détermination de motifs permet de faciliter l'identification d'utilisations récurrentes et donc par conséquence la surveillance des données usage utilisateur.

Avantageusement, lorsqu'une utilisation récurrente est identifiée, le procédé selon l'invention peut être configuré pour comprendre une étape d'association d'un identifiant unique à une telle récurrence, plus particulièrement au motif préalablement déterminé et mémorisé.

Tout aussi conjointement, le procédé selon l'invention peut comprendre **une étape de surveillance 400 des données usage tiers.**

L'étape de surveillance des données usage tiers permet de cartographier les utilisations de l'objet connecté et de préférence de l'objet connecté demandeur. De façon particulièrement avantageuse, l'étape de surveillance des données usage tiers peut comprendre la surveillance des sollicitations de l'objet connecté par un ou plusieurs dispositifs de l'infrastructure informatique, telle que par exemple la saisonnalité, la durée d'utilisation. Ainsi, il est possible de disposer à tout moment de l'utilisation de l'objet connecté par un ou plusieurs dispositifs tiers. Il est à noter que la surveillance des données usage tiers peut se faire par exemple par la surveillance de la consommation en bande passante, du volume entrant, du volume sortant de l'objet connecté demandeur et/ou du dispositif tiers sur sa liaison (i.e. passerelle de connexion) avec l'objet connecté demandeur. De façon avantageuse, la surveillance des données usage tiers peut également comprendre la surveillance des durées d'utilisation de l'objet connecté par un ou plusieurs dispositifs tiers.

L'étape de surveillance des données usage utilisateur peut comporter l'établissement d'un référentiel usage tiers, de préférence de l'objet connecté demandeur. Ce référentiel permet de mémoriser l'activité et l'utilisation de l'objet connecté par un ou plusieurs tiers. Ainsi le module applicatif peut déterminer quelles sont les horaires les plus sollicités ou au contraire les moins sollicités.

De façon avantageuse, l'étape de surveillance des données usage tiers est réalisée en continue par le module applicatif. La surveillance en continue permet ainsi une cartographie complète et totale de l'utilisation de l'objet connecté par un ou plusieurs dispositifs tiers.

En outre, de façon avantageuse, l'étape de surveillance des données usage tiers peut également comprendre **une étape de collecte 410 des données usage tiers.** Cette étape peut être réalisée selon des sondes, au même titre que l'étape de collecte des données usages utilisateurs décrite ci-dessus. L'étape de surveillance des données usage tiers peut également comprendre une étape d'identification des utilisations récurrentes, de détermination de seuils relatifs à des paramètres d'utilisation d'un objet connecté par un ou plusieurs dispositifs tiers de même qu'une étape de détermination de motifs. L'homme du métier saura retranscrire, au regard de la divulgation de l'étape de surveillance des données usage utilisateurs, ladite étape de surveillance des données usage utilisateurs à la surveillance des données usage tiers.

Le procédé selon l'invention, peut comprendre **une étape d'analyse 250 des données réseau.**

L'étape d'analyse des données réseaux peut être mise en œuvre par le module applicatif. L'étape d'analyse peut comprendre la recherche d'une ou plusieurs périodes des temps de communication disponibles en fonction du référentiel de communication.

La ou les périodes de temps disponibles sont de préférence des plages horaires disponibles pouvant être libre d'accès pour le réseau de communication, ou où le réseau de communication est moins sollicité ou le moins sollicité. L'étape de recherche peut correspondre à la recherche d'une ou plusieurs périodes de temps disponibles pouvant correspondre aux données de communication et aux paramètres des mises à jour, de préférence en fonction des paramètres de mises à jour selon leur niveau de priorité.

Ainsi l'étape d'analyse comprend l'identification de périodes de temps de communication disponibles en fonction du référentiel de communication.

Avantageusement, le procédé peut comprendre **une étape de génération 260 de modèles de communication.** Cette génération de modèle peut être mise en œuvre par le module applicatif. Avantageusement, l'étape de génération de modèles de communication est fonction des données réseaux collectées. Un modèle de communication peut être généré à partir d'un modèle d'apprentissage supervisé ou non supervisé pour prédire les périodes de temps disponibles. Avantageusement, cette étape de génération de modèle de communication peut également comprendre les communications récurrentes sur le réseau. Ceci permet d'améliorer l'étape d'analyse et un gain de temps lorsqu'un modèle de communication est identifié. Avantageusement, les modèles peuvent être mémorisés dans la base de données du module applicatif.

Avantageusement, l'étape d'analyse peut également comprendre **une étape de classement 270** de l'au moins une période de temps disponible. Cette étape peut être mise en œuvre par le module applicatif. L'étape de classement peut correspondre à la hiérarchisation des périodes de temps disponibles en fonction du référentiel de communication et des paramètres des mises à jours. Alternativement la hiérarchisation peut être fonction du référentiel de communication des paramètres des mises à jour catégorisées. Selon une autre alternative, la hiérarchisation peut être fonction du référentiel de communication et des paramètres de mise à jour des mises à jour priorisées. De préférence la hiérarchisation est réalisée de la période de temps la plus favorable (i.e. : disponible) à la moins favorable.

L'étape de classement permettra donc de faciliter la détermination d'un horaire pour optimiser les mises à jour d'un objet connecté.

L'étape de classement peut comporter la réalisation de plusieurs classements. Par exemple un premier classement des périodes de temps en fonction des passerelles pour une première catégorie de mise à jour, un second classement des périodes de temps en fonction de l'utilisation réseau et des passerelles, un troisième classement des périodes de temps en fonction des catégories de mises à jour ou de la priorisation des mises à jour en fonction du référentiel de communication. Ainsi, plusieurs classements peuvent être réalisés, toutefois, le classement sera de la période disponible la plus favorable à la moins favorable.

Par ailleurs, dans le cas de plusieurs classements, un classement final peut être mis en œuvre par le module applicatif afin de hiérarchiser la totalité des périodes de temps disponibles, issues de la pluralité des classements.

Alternativement lorsqu'une seule période de temps est disponible celle-ci sera automatiquement la plus favorable.

Alternativement, si aucune période de temps ne peut être disponible en fonction des données de communication, une étape de mise en **file d'attente 720** des mises à jour peut être mise en œuvre.

Avantageusement, l'étape d'analyse peut également comprendre une étape de **détermination d'une valeur de niveau d'accessibilité** réseau, de préférence pour chaque réseau, à l'objet connecté demandeur. Cette étape de détermination peut par exemple être fonction du référentiel de communication. Ainsi, ceci permet d'améliorer les performances réseaux et de déterminer la période de temps disponible également en fonction des performances réseaux et accessibilité réseau. Ceci permet également le désengorgement des réseaux.

Le procédé selon l'invention, peut comprendre **une étape d'analyse 350 des données usage utilisateur.**

L'étape d'analyse des données usage utilisateur peut être mise en œuvre par le module applicatif.

L'étape d'analyse peut comprendre la recherche d'une ou plusieurs périodes des temps d'utilisation utilisateur disponibles, de préférence de l'objet connecté demandeur en fonction du référentiel usage utilisateur.

En outre, l'étape d'analyse peut prendre en compte les utilisations récurrentes identifiées, les paramètres de mise à jour, la catégorisation des mises à jour, la priorisation des mises à jour. Ainsi, l'étape de recherche peut correspondre à la recherche d'une ou plusieurs périodes de temps pouvant correspondre aux périodes de temps disponibles de l'objet connecté par un ou plusieurs utilisateurs. La disponibilité de l'objet connecté, comprend, comme divulgué ci-dessus, la disponibilité de l'objet connecté en fonction notamment de son utilisation.

Cette recherche est de préférence réalisée par le module applicatif grâce à son référentiel usage.

Alternativement, si aucune période de temps ne peut être disponible, **une étape de mise en file d'attente 720 des mises à jour** peut être mise en œuvre. Par ailleurs, le procédé peut également reboucler.

Avantageusement, l'étape d'analyse peut également comprendre une étape d'ordonnancement des utilisations de l'objet connecté par un ou plusieurs utilisateurs.

Cette étape d'ordonnancement peut être réalisée par le module applicatif.

L'ordonnancement des utilisations de l'objet connecté peut correspondre à l'ordonnancement de l'ensemble des sollicitations de l'objet connecté par un ou plusieurs utilisateurs.

Par ailleurs, l'ordonnancement peut être pondéré en fonction des utilisations. Par exemple, l'ordonnancement peut être fonction de l'urgence de l'utilisation, de la récurrence de la communication. L'ordonnancement peut également être pondéré en fonction des paramètres des mises à jour, de la catégorie des mises à jour ou encore de la priorisation de mises à jour. Avantageusement, l'étape d'ordonnancement peut également hiérarchiser les utilisations de l'objet connecté de la moins perturbatrice à la plus perturbatrice pour l'objet connecté mais également pour un ou plusieurs utilisateurs.

Ainsi, l'ordonnancement des utilisations permet l'obtention d'utilisations hiérarchisées.

En outre, l'étape d'analyse peut comprendre une étape de **génération 360 d'au moins un modèle d'utilisation** de l'objet connecté demandeur en fonction du référentiel usage utilisateur. L'au moins un modèle d'utilisation peut être généré à partir d'un modèle d'apprentissage supervisé ou non supervisé pour prédire les périodes de temps indisponibles. Avantageusement, l'au moins un modèle d'utilisation peut également comprendre les utilisations récurrentes. Ceci permet d'améliorer l'étape d'analyse et un gain de temps lorsqu'un modèle d'utilisation est identifié. Avantageusement, les modèles peuvent être mémorisés dans la base de données du module applicatif.

Le procédé selon l'invention, peut comprendre **une étape d'analyse 450 des données usage tiers.**

L'étape d'analyse des données usage tiers peut être mise en œuvre par le module applicatif.

L'étape d'analyse peut comprendre la recherche d'une ou plusieurs périodes des temps d'utilisation tiers disponibles de préférence de l'objet connecté demandeur en fonction du référentiel usage tiers.

En outre, l'étape d'analyse peut prendre en compte les utilisations récurrentes identifiées, les paramètres de mise à jour, la catégorisation des mises à jour, la priorisation des mises à jour. Ainsi, l'étape de recherche peut correspondre à la recherche d'une ou plusieurs périodes de temps pouvant correspondre aux périodes de temps disponibles de l'objet connecté par un ou plusieurs dispositifs tiers. La disponibilité de l'objet connecté, comprend, comme divulgué ci-dessus, la disponibilité de l'objet connecté en fonction notamment de son utilisation par un ou plusieurs dispositifs tiers de l'infrastructure d'objets connectés.

Cette recherche est de référence réalisée par le module applicatif grâce à son référentiel usage tiers.

Alternativement, si aucune période de temps ne peut être disponible, **une étape de mise en file d'attente 720 des mises à jour** peut être mise en œuvre. Par ailleurs, le procédé peut également reboucler.

Avantageusement, l'étape d'analyse peut également comprendre une étape d'ordonnancement des utilisations de l'objet connecté par un ou plusieurs dispositifs tiers. Cette étape peut être à l'image de l'étape d'ordonnancement des utilisations de l'objet connecté par un ou plusieurs utilisateurs divulguée ci-dessus. L'ordonnancement des utilisations par un ou plusieurs dispositifs tiers permet l'obtention d'utilisations hiérarchisées (de la plus favorable à la moins favorable).

En outre, l'étape d'analyse peut également comprendre une étape de **génération 460 d'au moins un modèle d'utilisation** de l'objet connecté demandeur en fonction du référentiel usage tiers. L'au moins un modèle d'utilisation tiers peut être généré à partir d'un modèle d'apprentissage supervisé ou non supervisé pour prédire les périodes de temps indisponibles, notamment pour un ou plusieurs dispositifs tiers. Avantageusement, l'au moins un modèle d'utilisation tiers peut également comprendre les utilisations récurrentes. Ceci permet d'améliorer l'étape d'analyse et un gain de temps lorsqu'un modèle d'utilisation tiers est identifié. Avantageusement, les modèles peuvent être mémorisés dans la base de données du module applicatif.

Le procédé selon l'invention peut comprendre une **étape de classement 500 des périodes de temps** d'utilisation utilisateur disponibles et des périodes de temps d'utilisation tiers disponibles. Ce classement peut être mis en œuvre par le module applicatif.

Le classement peut être fonction des données usages utilisateur et des données usages tiers analysées de l'objet connecté demandeur. En effet, il peut s'avérer intéressant de privilégier un type d'interaction (Utilisateur/Tiers) ou hiérarchiser les périodes de temps en fonctions des utilisations. Autrement dit en fonction des référentiels usages utilisateurs et tiers, des utilisations récurrentes utilisateurs et tiers. En outre, ce classement peut prendre en compte les paramètres des mises à jour, la catégorisation des mises à jour, la priorisation des mises à jour.

Ainsi, cette étape de classement permet de trier les périodes de temps de disponibilités utilisateur ou tiers. Le classement permet également de hiérarchiser les périodes de temps disponibles utilisateur ou tiers en fonction des utilisations de l'objet connecté. Ceci permet d'autant plus d'éviter toute indisponibilité totale ou partielle de l'objet connecté pour un tiers ou un utilisateur, de préférence en fonction de la mise à jour.

Le procédé d'optimisation de mise à jour peut comprendre **une étape de détermination 700 d'au moins un horaire** de mise à jour pour l'objet connecté demandeur. Cette détermination peut être mise en œuvre par le module applicatif.

De préférence, la détermination d'au moins un horaire de mise à jour est fonction des périodes de temps de communication disponibles, des périodes de temps d'utilisation utilisateur disponibles, des périodes de temps d'utilisation tiers disponibles. Avantageusement, les périodes de temps de disponibilités de communication peuvent être classées, de même que pour les périodes de temps d'utilisateurs et tiers.

De façon plus préférée, la détermination d'au moins un horaire de mise à jour est fonction des périodes de temps de communication disponibles, et des périodes de temps d'utilisation utilisateur et tiers hiérarchisées.

Il est à noter que cette détermination en fonction des périodes de temps disponibles est fonction des paramètres de mises à jour, des catégories de mise à jour et de la priorisation de mise à jour déjà prises en compte lors des différentes étapes analyses.

Par ailleurs, le ou les horaires sont de préférence des créneaux horaires correspondant à la fois à la période de temps de communication disponible la plus favorable, la période de temps d'utilisation utilisateurs la plus favorable et à la période de temps d'utilisation tiers la plus favorable. Ainsi il s'agira de l'horaire de mise à jour le moins perturbateur pour un utilisateur, pour un tiers, où le réseau sera le plus performant et où la consommation en ressource sera optimisée.

Alternativement, comme divulgué précédemment, si aucune période de temps n'est disponible, et par conséquent aucun horaire ne peut être déterminé, le procédé peut comprendre **une étape de mise en file d'attente 720** ; de préférence sous forme de file d'attente des mises à jour. Le procédé peut également reboucler.

Avantageuse, lorsqu'aucune période de temps n'est disponible ou qu'aucun horaire ne peut être commun, le procédé peut comprendre **une étape de transmission 710 d'une alerte,** de préférence à un utilisateur. Ceci permet d'informer un utilisateur qu'une mise à jour est disponible mais qu'aucun horaire coïncidant n'a pu encore être déterminé. Avantageusement, le procédé comprend une étape de transmission d'une alerte, par le module applicatif lorsque les périodes de temps de communication disponibles et les périodes de temps d'utilisation disponibles ne comportent pas un horaire de mise à jour coïncidant.

L'invention peut comprendre **une étape de transmission 800 de l'horaire de mise à jour.** Cette étape peut être mise en œuvre par le module applicatif. De préférence cette étape de transmission comprend la transmission de l'horaire de mise à jour à l'objet connecté, de préférence à l'application de l'objet connecté demandeur.

Le procédé selon l'invention peut comprendre **une étape de sélection 810 d'un réseau optimal,** de préférence en fonction de l'horaire transmis.

Cette étape peut être mise en œuvre par le module applicatif. De préférence cette étape de sélection est mise en œuvre par l'objet connecté. Ceci permet à l'objet connecté de vérifier et confirmer que l'horaire transmis concorde avec ses communications réseaux.

Ainsi, l'étape de sélection réseau comprend l'élection du réseau le plus performant pour l'objet connecté au regard de l'horaire transmis, des périodes de temps de communication disponible. De préférence, la sélection d'un réseau est fonction de la valeur de niveau d'accessibilité réseau déterminée. Ceci permet de sélectionner un horaire optimal disponible durant lequel une indisponibilité totale ou partielle du réseau et/ou de l'objet connecté serait la moins perturbatrice pour un utilisateur et un tiers. Par ailleurs, la sélection par l'objet connecté permet à l'objet connecté d'élire l'horaire lui étant le mieux adapté, ce qui se traduit à la fois par une diminution de la perturbation de l'utilisation de l'objet connecté, la diminution de la saturation réseau et la possibilité pour l'objet connecté de choisir son réseau et donc d'opter pour les meilleures caractéristiques de connectivité. Avantageusement, cette sélection est également réalisée au regard des paramètres de mises à jour des mises à jour, mais également des paramètres de mise à jour de l'objet connecté. Ainsi, il est également possible que la sélection d'un réseau optimal soit fonction des catégories des mises à jour et/ou de la priorisation des mises à jour.

Ainsi la sélection peut être fonction des données de fonctionnement propre à l'objet connecté demandeur. Il peut par exemple s'agir d'un degré d'urgence, d'un degré d'attente, d'un degré de perturbation de l'objet connecté pour les services et les utilisateurs tout en étant fonction de la perturbation de l'objet connecté pour les tiers et les utilisateurs.

Le procédé selon l'invention peut comprendre **une étape de sélection 820 d'un horaire optimal** en fonction de l'au moins un horaire et de priorisation de mise à jour de l'objet connecté demandeur. Cette étape peut être mise en œuvre par le module applicatif. De préférence cette étape peut être réalisée par l'objet connecté demandeur. Comme déjà divulgué la priorisation des mises à jour peut être réalisée par une fonction de priorisation. Avantageusement, dans ce cas, l'étape de sélection peut également comprendre la taille, le poids, l'urgence, fréquence d'utilisation de l'objet connecté à mettre à jour, la sécurité, le protocole de communication etc selon les paramètres de mises à jour de l'objet connecté demandeur.

Ainsi, la sélection d'un horaire optimal permet d'éviter une saturation du réseau et une perturbation de l'utilisation de l'objet connecté tout en donnant la possibilité à l'objet connecté de sélectionner un créneau lui étant aussi adapté afin d'éviter sa propre indisponibilité totale ou partielle pouvant alors perturber l'objet connecté, les tiers et les utilisateurs.

Ainsi la sélection peut être fonction des données de fonctionnement propre à l'objet connecté. Il peut par exemple s'agir d'un degré d'urgence, d'un degré d'attente, d'un degré de perturbation de l'application pour les tiers et les utilisateurs tout en étant fonction de la perturbation de l'objet connecté pour les tiers et les utilisateurs. La sélection pouvant être fonction de l'horaire transmis et donc des périodes de temps disponibles, l'objet connecté peut au regard de son propre fonctionnement, sélectionner l'horaire optimal pour réaliser la mise à jour.

Le procédé selon l'invention peut comprendre **une étape de mise à jour 900 de l'objet connecté demandeur.**

De préférence cette étape est réalisée par l'objet connecté demandeur.

Cette mise à jour est avantageusement réalisée selon un horaire optimal selon les périodes de temps disponibles et les critères de fonctionnement et de mise à jour de l'objet connecté demandeur mais également en fonction des paramètres de connectivité et de qualité réseau accessible à l'objet connecté demandeur.

L'objet connecté peut alors réaliser sa mise à jour sur un horaire optimal, c'est-à-dire, où le réseau accessible est le plus performant et pour lequel la mise à jour de l'objet connecté n'entrainera ni surcharge réseau ni indisponibilité totale ou partielle du réseau pour l'utilisateur ou des tiers. En outre, cette mise à jour pourra également être fonction des caractéristiques des passerelles de connexion afin d'assurer une mise à jour selon un horaire optimal.

De même, l'objet connecté peut réaliser sa mise à jour sur un horaire optimal, c'est-à-dire un horaire où l'objet connecté est disponible, c'est-à-dire ou l'impact d'une indisponibilité totale ou partielle de l'objet connecté pour un ou plusieurs utilisateurs ou un ou plusieurs tiers sera le moins perturbateur.

En outre, la réalisation de la mise à jour est également fonction des catégories de mises à jour, de priorisation de mise à jour et des paramètres de mises à jour propre à l'objet connecté demandeur, ce qui permet d'améliorer d'autant plus et d'assurer l'optimum de l'horaire sélectionné pour la réalisation de la mise à jour.

Le procédé selon l'invention permet donc d'optimiser les mises à jours d'un objet connecté demandeur en mettant en relation l'activité sur le réseau, l'utilisation de l'objet connecté demandeur (tiers et utilisateurs), les mises à jours afin d'assurer une disponibilité pour la réalisation de mise à jour durant laquelle l'indisponibilité totale ou partielle est la moins perturbatrice et où le réseau (y compris les passerelles de connexion) sera le plus adapté, performant, accessible et disponible. Le procédé permet donc d'optimiser les mises à jour des objets connectés au sein d'une infrastructure d'objets connectés.

Ainsi, le procédé selon l'invention permet de rechercher pour chaque objet connecté souhaitant effectuer une mise à jour, un horaire et avantageusement un horaire optimal pour effectuer cette mise à jour. Avantageusement, l'horaire optimal correspond à l'horaire le moins perturbateur pour un utilisateur, pour l'objet connecté dudit utilisateur et pour tous autres dispositifs informatiques couplés à l'objet connecté.

Un exemple de mise en oeuvre de la présente invention est illustré à la **figure 4****.**

Dans cet exemple, un objet connecté loT1 souhaite réaliser une mise à jour.

Au préalable un module applicatif 13 est déployé sur l'objet connecté demandeur. Ce module applicatif peut être configuré 100 pour définir des indicateurs pertinents pour la surveillance d'une pluralité de données.

En parallèle, le module applicatif 13 peut être configuré pour catégoriser 150 l'ensemble des mises à jour qui se rapportent à l'objet connecté demandeur. Ainsi le module applicatif classe les mises à jour de l'objet connecté demandeur. Par exemple, mise à jour de sécurité, mise à jour de fonctionnement, mise à jour de perfectionnement. Le module applicatif peut également prioriser les mises à jour, au moyen d'une fonction de priorisation. Ainsi, les mises à jour de sécurité peuvent par exemple être priorisées au sein de la catégorie des mises à jour de sécurité selon un niveau de priorité relatif à la fonction de priorisation et aux paramètres de chaque mise à jour. Ainsi, le module applicatif peut déterminer au regard des paramètres que la catégorie mise à jour de fonctionnement comprend plus de mise à jour que la catégorie mise à jour de sécurité. Toutefois, le module applicatif peut également déterminer qu'au regard des paramètres des mises à jour, une mise à jour de sécurité est prioritaire.

En parallèle, le module applicatif 13 est configuré pour mettre en place une surveillance 200 de l'activité sur le réseau permettant de cartographier les échanges actuels sur le réseau afin d'établir un référentiel de communication. Avantageusement la surveillance comprend également les données de connectivité des passerelles de connexion GW1, GW2. Ainsi le module applicatif peut collecter les données et établir un référentiel de communication comprenant à la fois l'activité réseau et la connectivité des passerelles de connexion. L'objectif est de pouvoir disposer à tout moment de l'activité en cours et de déterminer, lorsque cela est possible, des communications récurrentes et les informations les concernant (volume, entrant, volume sortant, durée moyenne, fréquence de communication etc...). Lesdites communications récurrentes peuvent être identifiées par le module applicatif. Celui-ci fournit un identifiant pour chaque communication récurrente.

Avantageusement, le module applicatif peut alors déterminer une valeur de niveau d'accessibilité réseau.

En parallèle à cette étape, le module applicatif peut mettre en place une surveillance 300 des données usage utilisateur permettant de cartographier les utilisations de l'objet connecté par les utilisateurs et une surveillance 400 des données usage tiers permettant de cartographier les utilisations de l'objet connecté demandeur par les tiers (les autres dispositifs informatiques) afin d'établir un référentiel usage utilisateur et un référentiel usage tiers.

L'objectif est de pouvoir disposer à tout moment de l'utilisation totale et en cours de l'objet connecté demandeur et de déterminer, lorsque cela est possible, des utilisations récurrentes et les informations les concernant (volume entrant, volume sortant, durée moyenne, destinataire etc...). Lesdites utilisations récurrentes peuvent être identifiées par le module applicatif.

Le module applicatif peut alors analyser les données de communications, d'usage utilisateurs et d'usage tiers. Cette analyse permet de déterminer des périodes de temps de préférence disponibles pour la réalisation de mises à jour priorisées, à savoir dans cette exemple non limitatif et purement illustratif d'un mode de réalisation, la mise à jour de sécurité.

De préférence lors de cette analyse, le module applicatif peut classer lesdites périodes de temps disponibles en fonction des paramètres des mises à jour, de la catégorisation des mises à jour et/ou de la priorisation des mises à jour. En effet, ceci permet pour la mise à jour de sécurité priorisée et catégorisée de déterminer des périodes de disponibilité réseau, et des périodes de disponibilité usage utilisateur et tiers. Avantageusement, le module applicatif peut également classer les périodes de temps disponibles d'usage utilisateur et d'usage tiers entre elles. Ceci permet de déterminer au moins une période de temps disponibles pour l'ensemble des utilisations de l'objet connecté demandeur au regard de la mise à jour de sécurité.

À la suite des différents classements des périodes de temps disponibles, le module applicatif peut alors sélectionner au moins un horaire de mise à jour pour l'objet connecté demandeur. Cet horaire et de préférence ces horaires sont alors transmis à l'objet connecté qui peut au regard de ses communications réseaux, utilisations utilisateurs, tiers, paramètres propres de mises à jour sélectionner un horaire optimal.

Ainsi, en fonction de l'horaire optimal l'objet connecté pourra réaliser la mise à jour, en l'occurrence la mise à jour de sécurité.

Selon un autre aspect, l'invention porte sur **un module applicatif 13** pour l'optimisation de mises à jour d'objet connecté.

Le **module applicatif** est de préférence embarqué sur un objet connecté demandeur pour l'optimisation de mise à jour de l'objet connecté demandeur dans une infrastructure d'objets connectés comportant une pluralité de passerelles de connexion GW1, GW2 à des sous réseaux 11,12 de transport de données pouvant présenter des normes de communication différentes.

En se référant à nouveau à la figure 1, un module applicatif est installé sur un objet connecté. Toutefois, l'invention ne se limite pas au nombre de module applicatif installé sur un objet connecté.

Le module applicatif 13 est destiné à optimiser les mises à jour d'un objet connecté sur lequel il est installé.

Avantageusement, le module applicatif peut être tout dispositif, unité, combinaison de logiciel, micrologiciel ou matériel utilisé pour exécuter la ou les fonctions spécifiées. Le module applicatif peut être mis en œuvre en tant que modules logiciels, mais peut être représenté partiellement ou entièrement sous forme de matériel ou de micrologiciel. Il est envisagé que les fonctions exécutées par le module applicatif puissent également être incorporées dans un nombre de modules supérieur ou inférieur à celui décrit. Par exemple, une seule fonction peut être réalisée par le fonctionnement de plusieurs modules applicatifs ou plusieurs fonctions peuvent être exécutées par le même module applicatif. Le module applicatif peut être mis en œuvre sous forme de matériel, logiciel, micrologiciel ou toute combinaison de ceux-ci. De plus, le module applicatif peut résider sur différentes couches d'un objet connecté. Avantageusement ; le module applicatif peut être en lien avec une ou plusieurs passerelles de connexion.

En outre, le module applicatif peut être apte à, de préférence configuré pour communiquer avec l'objet connecté sur lequel il est embarqué.

Avantageusement, le module applicatif ne nécessite pas de ressources distantes à l'objet connecté sur lequel il est installé pour mettre en œuvre ses différentes applications et fonctions. Ainsi, le module applicatif est autonome. Ceci permet une diminution des ressources pour l'optimisation de mises à jour. En outre, le module applicatif est destiné à être adaptable à tout type d'objet connecté. Ceci améliore donc sa disponibilité et son assimilation pour chaque objet connecté. Ainsi, il est simple à mettre en œuvre.

En outre, le module applicatif peut comprendre une base de données (non illustrée). Une telle base de données peut être configurée pour mémoriser des données, des identifiants, des valeurs etc...

Le module applicatif peut être apte à, de préférence configuré pour classifier des mises à jour de l'objet connecté. En outre, le module applicatif peut être apte, à de préférence configuré pour prioriser des mises à jours de l'objet connecté. De préférence, la priorisation des mises à jour est fonction d'au moins une fonction de priorisation. Le module applicatif permet de définir des niveaux de priorité par mise à jour, de préférence par mise à jour catégorisée.

Le module applicatif est apte à, de préférence configuré pour **surveiller des données réseaux.** Le module applicatif peut donc être apte à, de préférence configuré pour collecter des données réseaux.

Le module applicatif peut être apte à, de préférence configuré pour, sonder les communications utilisant les réseaux de communication de l'objet connecté sur lequel il est installé. Avantageusement, le module applicatif est apte à, de préférence configuré pour cartographier les communications sur les réseaux mais également les paramètres de connectivité des passerelles de connexion. De préférence, il s'agit des passerelles de connexion de l'objet connecté sur lequel le module applicatif est installé et avec lesquelles l'objet connecté peut communiquer avec les différents réseaux auxquels il peut avoir accès.

Le module applicatif peut alors être apte à, de préférence configuré pour identifier le volume entrant, le volume sortant, les durées de communication passant par le réseau de communication, les paramètres de connectivité des passerelles de connexion tels que divulgué précédemment.

Ainsi le module applicatif peut être apte à, de préférence configuré pour établir un référentiel de communication.

Alternativement, les passerelles de connexion sont aptes à, de préférence configurées pour supporter les différents types de protocoles de communication entre le module applicatif et les réseaux de communication.

Le module applicatif peut être apte à, de préférence configuré pour identifier des communications récurrentes. Le module applicatif peut être apte à, de préférence configuré pour mémoriser des règles de récurrences préétablies. Ceci permet une surveillance et une identification améliorée, plus simple et rapide.

En outre, de façon avantageuse, le module applicatif peut être apte à, de préférence configuré pour surveiller le réseau de communication en fonction de seuils relatifs à des paramètres du réseau de communication. Alternativement ou de façon complémentaire, le module applicatif peut être apte à, de préférence configuré pour surveiller le réseau de communication en fonction de motifs de communication d'un réseau de communication. Ainsi, le module applicatif peut également être apte à, de préférence configuré pour identifier des communications récurrentes en fonction de motifs correspondant à des motifs de communications récurrentes sur le réseau de communication.

Par ailleurs, le module applicatif peut être apte à, de préférence configuré pour fournir un identifiant d'échange à une communication récurrente identifiée.

Le module applicatif est apte à, de préférence configuré pour **surveiller des données d'usage utilisateurs**. Le module applicatif est apte à, de préférence configuré pour **surveiller des données d'usage tiers.**

Le module applicatif peut donc être apte à, de préférence configuré pour collecter des données d'usage utilisateur et/ou des données usage tiers.

Ainsi le module applicatif peut être apte à, de préférence configuré pour cartographier les utilisations d'un objet connecté. Il peut par exemple s'agir du volume entrant, du volume sortant, de la durée d'utilisation, de fréquence d'utilisation.

En outre, le module applicatif peut être apte à, de préférence configuré pour établir un référentiel usage utilisateur. De préférence en fonction de la surveillance des données d'usage utilisateurs.

Le module applicatif peut être apte à, de préférence configuré pour établir un référentiel usage tiers, de préférence en fonction de la surveillance des données d'usage tiers.

Ainsi le module applicatif peut déterminer quels sont les horaires les plus sollicités ou au contraire les moins sollicités de l'objet connecté. De préférence cette détermination est fonction à la fois des données d'utilisation utilisateurs et des données d'utilisation tiers.

En outre, le module applicatif peut être apte à, de préférence configuré pour identifier des utilisations récurrentes. De préférence, il peut d'agir d'utilisations récurrentes par un ou plusieurs utilisateurs. De façon également préférée, il peut s'agir d'utilisations récurrentes par un ou plusieurs tiers. Afin de déterminer une utilisation récurrente, celle-ci peut être prédéfinie. Avantageusement, la base de données peut être configurée pour mémoriser la définition d'une utilisation récurrente au moyen de règles préétablies.

En outre, de façon avantageuse, le module applicatif peut être apte à, de préférence configuré pour surveiller l'utilisation d'un objet connecté en fonction de seuils relatifs des paramètres d'utilisation d'un objet connecté. Alternativement ou de façon complémentaire, le module applicatif peut être apte à, de préférence configuré pour surveiller l'utilisation d'un objet connecté en fonction de motifs d'utilisation récurrente d'un objet connecté. Ainsi, le module applicatif peut également être apte à, de préférence configuré pour identifier des communications récurrentes en fonction de motifs correspondant à des motifs d'utilisation récurrentes de l'objet connecté, que celles-ci soient par un ou plusieurs utilisateurs, ou, un ou plusieurs tiers.

Le module applicatif peut être apte à, de préférence configuré pour **analyser les données réseaux** comprenant l'identification de périodes de temps de communication disponibles en fonction du référentiel de communication. Le module applicatif peut être apte à, de préférence configuré pour rechercher des périodes de temps de communication disponibles.

Ainsi, le module applicatif est apte à, de préférence configuré pour comparer les paramètres des mises à jour, de préférence des mises à jour catégorisées et/ou priorisées avec son référentiel de communication. Le module applicatif, peut alors, être apte à, de préférence configuré pour identifier au moins un horaire disponible en fonction des données de communication, du référentiel de communication et de préférence, en fonction des paramètres des mises à jour.

Avantageusement le module applicatif peut être apte à, de préférence configuré pour générer des modèles de communication. De préférence, en fonction des données réseaux collectés. Un modèle de communication peut être généré tel que décrit plus haut.

Le module applicatif peut être apte à, de préférence configuré pour classer les périodes de temps de communications disponibles.

Avantageusement, le module applicatif peut également être apte à, de préférence configuré pour déterminer une valeur de niveau d'accessibilité réseau. De préférence pour chaque réseau auquel est connecté l'objet connecté.

Le module applicatif peut être apte à, de préférence configuré pour **analyser les données d'usage utilisateurs** comprenant l'identification de périodes de temps d'utilisation utilisateurs disponibles de l'objet connecté demandeur en fonction du référentiel usage utilisateurs,

Le module applicatif peut être apte à, de préférence configuré pour **analyser les données d'usage tiers** comprenant l'identification de périodes de temps d'utilisation tiers disponibles de l'objet connecté demandeur en fonction du référentiel usage tiers,

Ainsi, le module applicatif peut être apte à, de préférence configuré pour rechercher une ou plusieurs périodes de temps disponibles en fonction de ses référentiels usage utilisateurs et/ou tiers.

Avantageusement, le module applicatif peut être apte à, de préférence configuré pour générer au moins un modèle d'utilisation de l'objet connecté en fonction du référentiel usage utilisateur. Avantageusement, le module applicatif peut être apte à, de préférence configuré pour générer au moins un modèle d'utilisation de l'objet connecté en fonction du référentiel usage tiers.

Par ailleurs, le module applicatif peut être apte à, de préférence configuré pour classifier des périodes de temps d'utilisation disponibles de l'objet connecté. Il peut s'agir d'un classement des périodes de temps d'utilisation utilisateur, des périodes de temps utilisation tiers, des périodes de temps d'utilisation utilisateurs et tiers.

La classification peut donc être par exemple fonction du type d'utilisation (humaine ou par un autre dispositif informatique), du volume entrant, du volume sortant, de la durée d'utilisation etc...

Le module applicatif est apte à, de préférence configuré pour **déterminer au moins un horaire de mise à jour** pour l'objet connecté demandeur en fonction des périodes de temps de communication disponibles, des périodes de temps d'utilisation utilisateurs disponibles, des périodes de temps d'utilisation tiers disponibles. Ainsi, le module applicatif est apte à, de préférence configuré pour comparer les différentes périodes de temps. Le module applicatif peut alors, être apte à, de préférence configuré pour identifier au moins un horaire de mise à jour.

Avantageusement, le module applicatif peut être apte à, de préférence configuré pour mettre en attente la ou les mises à jour lorsqu'aucun horaire n'est déterminé ou période de temps n'est disponible.

Avantageusement, le module applicatif peut être apte à, de préférence configuré pour transmettre une alerte à un utilisateur. Ceci permet d'informer un utilisateur qu'une mise à jour est disponible mais qu'aucun horaire n'a pu encore être déterminé.

Enfin, le module applicatif peut être apte à, de préférence configuré pour transmette l'horaire de mise à jour. De préférence le module applicatif est configuré pour transmettre l'horaire de mise à jour à l'objet connecté sur lequel il est installé.

Selon un autre aspect, l'invention concerne **un système d'optimisation 10 de mise à jour** d'objets connectés IoT1,IoT2,IoT3 dans une infrastructure d'objets connectés comportant une pluralité de passerelles de connexion GW1,GW2 à des sous réseaux 11,12 de transport de données pouvant présenter des normes de communication différentes. Le système d'optimisation de mise à jour comprend au moins un objet connecté demandeur IoT1,IoT2,IoT3 configuré pour accéder à au moins une passerelle de la pluralité des passerelles de connexion.

Le système selon l'invention comprend au moins un module applicatif 13 selon l'invention installé sur un objet connecté.

Un système pour optimiser les mises à jour selon l'invention pourra en particulier comporter un **client** (non représenté). Le client correspond généralement, à tout matériel et/ou logiciel susceptible d'accéder au système et permettant par exemple sa configuration ou la consultation de données via une interface homme-machine dédiée.

Un client peut également être apte à permettre la configuration du module applicatif.

Selon un autre aspect, l'invention porte en outre sur **un objet connecté** IoT1,IoT2,IoT3 comprenant un module applicatif 13 selon l'invention pour l'optimisation de mise à jour de l'objet connecté dans une infrastructure d'objets connectés.

Selon encore un autre aspect, l'invention porte également sur **un programme d'ordinateur** pour l'optimisation de mise à jour d'objets connectés IoT1,IoT2,IoT3 dans une infrastructure d'objets connectés, comportant des instructions de code de programme pour la mise en œuvre d'un procédé selon l'invention lorsque ledit programme est exécuté sur un ordinateur.

## Revendications

1. Procédé d'optimisation (1) de mise à jour d'objets connectés (IoT1,IoT2,IoT3) dans une infrastructure d'objets connectés comportant une pluralité de passerelles de connexion (GW1,GW2) à des sous réseaux (11,12) de transport de données pouvant présenter des normes de communication différentes, ladite infrastructure d'objets connectés comprenant au moins un objet connecté demandeur (IoT1,IoT2,IoT3) configuré pour accéder à au moins une passerelle de la pluralité des passerelles de connexion et au moins un module applicatif (13) installé sur ledit objet connecté demandeur ;**caractérisé en ce que** le procédé d'optimisation de mise à jour d'objets connectés comprend les étapes suivantes mise en oeuvre par le module applicatif (13) dudit objet connecté demandeur :
- une étape de surveillance (200) des données réseaux, comportant l'établissement d'un référentiel de communication,
- une étape de surveillance (300) des données usage utilisateurs, comportant l'établissement d'un référentiel usage utilisateurs de l'objet connecté demandeur,
- une étape de surveillance (400) des données usage tiers, comportant l'établissement d'un référentiel usage tiers de l'objet connecté demandeur,
- une étape d'analyse (250) des données réseaux, ladite analyse comprenant l'identification de périodes de temps de communication disponibles en fonction du référentiel de communication,
- une étape d'analyse (350) des données usage utilisateurs, ladite analyse comprenant l'identification de périodes de temps d'utilisation utilisateur disponibles de l'objet connecté demandeur en fonction du référentiel usage utilisateurs,
- une étape d'analyse (450) des données usage tiers, ladite analyse comprenant l'identification de périodes de temps d'utilisation tiers disponibles de l'objet connecté demandeur en fonction du référentiel usage tiers, et
- une étape de détermination (700) d'au moins un horaire de mise à jour pour l'objet connecté demandeur en fonction des périodes de temps de communication disponibles, des périodes de temps d'utilisation utilisateurs disponibles, des périodes de temps d'utilisation tiers disponibles.

2. Procédé d'optimisation (1) selon la revendication 1, **caractérisé en ce qu'**il comprend une étape de catégorisation (150) de mise à jour, par le module applicatif (13).

3. Procédé d'optimisation (1) selon la revendication 1 ou 2, **caractérisé en ce qu'**il comprend une étape de priorisation (160) des mises à jour, par le module applicatif, en fonction de règles de mise à jour de l'objet connecté demandeur.

4. Procédé d'optimisation (1) selon l'une des revendications précédentes, **caractérisé en ce qu'**il comprend une étape de mise en file d'attente (720) de la mise à jour, par le module applicatif (13).

5. Procédé d'optimisation (1) selon l'une des revendications précédentes, **caractérisé en ce qu'**il comprend une étape de transmission (710) d'une alerte, par le module applicatif (13) lorsque les périodes de temps de communication disponibles et les périodes de temps d'utilisation disponibles ne comportent pas un horaire de mise à jour coïncidant.

6. Procédé d'optimisation (1) selon l'une quelconque des revendications précédentes, **caractérisé en ce qu'**il comprend une étape de sélection (820), par l'objet connecté demandeur, d'un horaire optimal en fonction de l'au moins un horaire de mise à jour et de règles de mise à jour de l'objet connecté demandeur.

7. Procédé d'optimisation (1) selon l'une des revendications précédentes, **caractérisé en ce qu'**il comprend une étape de classement (500), par le module applicatif (13) des périodes de temps d'utilisation utilisateurs disponibles et des périodes de temps d'utilisation tiers disponibles.

8. Module applicatif (13) pour l'optimisation de mise à jour d'objets connectés (IoT1,IoT2,IoT3) dans une infrastructure d'objets connectés comportant une pluralité de passerelles de connexion (GW1,GW2) à des sous réseaux (11,12) de transport de données pouvant présenter des normes de communication différentes, ladite infrastructure d'objets connectés comprenant au moins un objet connecté (IoT1,IoT2,IoT3) demandeur sur lequel est installé ledit module applicatif (13), ledit objet connecté demandeur étant apte à accéder à au moins une passerelle de la pluralité des passerelles de connexion, ledit module applicatif (13) étant configuré pour :
- surveiller des données réseaux, afin d'établir un référentiel de communication,
- surveiller des données d'usage utilisateurs, afin d'établir un référentiel usage utilisateurs de l'objet connecté demandeur,
- surveiller des données usage tiers, afin d'établir un référentiel usage tiers de l'objet connecté demandeur,
- analyser les données réseaux comprenant l'identification de périodes de temps de communication disponibles en fonction du référentiel de communication,
- analyser les données d'usage utilisateurs comprenant l'identification de périodes de temps d'utilisation utilisateurs disponibles de l'objet connecté demandeur en fonction du référentiel usage utilisateurs,
- analyser les données d'usage tiers comprenant l'identification de périodes de temps d'utilisation tiers disponibles de l'objet connecté demandeur en fonction du référentiel usage tiers, et
- déterminer au moins un horaire de mise à jour pour l'objet connecté demandeur en fonction des périodes de temps de communication disponibles, des périodes de temps d'utilisation utilisateurs disponibles, des périodes de temps d'utilisation tiers disponibles.

9. Système d'optimisation (10) de mise à jour d'objets connectés (IoT1,IoT2,IoT3) dans une infrastructure d'objets connectés comportant une pluralité de passerelles de connexion (GW1,GW2) à des sous réseaux (11,12) de transport de données pouvant présenter des normes de communication différentes, ledit système d'optimisation de mise à jour comprenant au moins un objet connecté (IoT1,IoT2,IoT3) demandeur configuré pour accéder à au moins une passerelle de la pluralité des passerelles de connexion et à au moins un module applicatif (13) selon la revendication 8 installé sur ledit objet connecté.

10. Objet connecté (IoT1,IoT2,IoT3) comprenant un module applicatif (13) selon la revendication 8 pour l'optimisation de mise à jour de l'objet connecté dans une infrastructure d'objets connectés.

11. Programme informatique pour l'optimisation de mise à jour d'objets connectés (IoT1,IoT2,IoT3) dans une infrastructure d'objets connectés, comportant des instructions de code de programme pour la mise en oeuvre d'un procédé selon l'une des revendications 1 à 7 lorsque ledit programme est exécuté sur un dispositif informatique.

## Patentansprüche

1. Verfahren zur Optimierung (1) der Aktualisierung von verbundenen Objekten (loT1, IoT2, IoT3) in einer Infrastruktur verbundener Objekte, umfassend eine Vielzahl von Verbindungs-Gateways (GW1, GW2) zu Teilnetzwerken (11, 12) für den Datentransport, die unterschiedliche Kommunikationsstandards aufweisen können, wobei die Infrastruktur verbundener Objekte mindestens ein anforderndes verbundenes Objekt (loT1, IoT2, IoT3), das dazu konfiguriert ist, auf mindestens eines aus der Vielzahl von Verbindungs-Gateways zuzugreifen, und mindestens ein Anwendungsmodul (13), das auf dem anfordernden verbundenen Objekt installiert ist, umfasst; **dadurch gekennzeichnet, dass** das Verfahren zur Optimierung der Aktualisierung von verbundenen Objekten die folgenden Schritte umfasst, die von dem Anwendungsmodul (13) des anfordernden verbundenen Objekts durchgeführt werden:
- einen Schritt des Überwachens (200) der Netzwerkdaten, umfassend das Erstellen eines Kommunikations-Repositorys,
- einen Schritt des Überwachens (300) der Benutzernutzungsdaten, umfassend das Erstellen eines Benutzernutzungs-Repositorys des anfordernden verbundenen Objekts,
- einen Schritt des Überwachens (400) der Drittnutzungsdaten, umfassend das Erstellen eines Drittnutzungs-Repositorys des anfordernden verbundenen Objekts,
- einen Schritt des Analysierens (250) der Netzwerkdaten, wobei das Analysieren das Identifizieren verfügbarer Kommunikationszeiträume in Abhängigkeit von dem Kommunikations-Repository umfasst,
- einen Schritt des Analysierens (350) der Benutzernutzungsdaten, wobei das Analysieren das Identifizieren verfügbarer Benutzernutzungszeiträume des anfordernden verbundenen Objekts in Abhängigkeit von dem Benutzernutzungs-Repository umfasst,
- einen Schritt des Analysierens (450) der Drittnutzungsdaten, wobei das Analysieren das Identifizieren verfügbarer Drittnutzungszeiträume des anfordernden verbundenen Objekts in Abhängigkeit von dem Drittnutzungs-Repository umfasst, und
- einen Schritt des Bestimmens (700) mindestens eines Aktualisierungszeitplans für das anfordernde verbundene Objekt in Abhängigkeit von den verfügbaren Kommunikationszeiträumen, den verfügbaren Benutzernutzungszeiträumen, den verfügbaren Drittnutzungszeiträumen.

2. Verfahren zur Optimierung (1) nach Anspruch 1, **dadurch gekennzeichnet, dass** es einen Schritt des Kategorisierens (150) von Aktualisierungen durch das Anwendungsmodul (13) umfasst.

3. Verfahren zur Optimierung (1) nach Anspruch 1 oder 2, **dadurch gekennzeichnet, dass** es einen Schritt des Priorisierens (160) der Aktualisierungen durch das Anwendungsmodul in Abhängigkeit von Aktualisierungsregeln des anfordernden verbundenen Objekts umfasst.

4. Verfahren zur Optimierung (1) nach einem der vorstehenden Ansprüche, **dadurch gekennzeichnet, dass es** einen Schritt des Einreihens (720) der Aktualisierung in eine Warteschlange durch das Anwendungsmodul (13) umfasst.

5. Verfahren zur Optimierung (1) nach einem der vorstehenden Ansprüche, **dadurch gekennzeichnet, dass** es einen Schritt des Übertragens (710) einer Warnung durch das Anwendungsmodul (13) umfasst, wenn die verfügbaren Kommunikationszeiträume und die verfügbaren Nutzungszeiträume keinen übereinstimmenden Aktualisierungszeitplan enthalten.

6. Verfahren zur Optimierung (1) nach einem der vorstehenden Ansprüche, **dadurch gekennzeichnet, dass** es einen Schritt des Auswählens (820) eines optimalen Zeitplans durch das anfordernde verbundene Objekt in Abhängigkeit von dem mindestens einen Aktualisierungszeitplan und von Aktualisierungsregeln des anfordernden verbundenen Objekts umfasst.

7. Verfahren zur Optimierung (1) nach einem der vorstehenden Ansprüche, **dadurch gekennzeichnet, dass** es einen Schritt des Klassifizierens (500) der verfügbaren Benutzernutzungszeiträume und der verfügbaren Drittnutzungszeiträume durch das Anwendungsmodul (13) umfasst.

8. Anwendungsmodul (13) zur Optimierung der Aktualisierung von verbundenen Objekten (loT1, IoT2, IoT3) in einer Infrastruktur verbundener Objekte, umfassend eine Vielzahl von Verbindungs-Gateways (GW1, GW2) zu Teilnetzwerken (11, 12) für den Datentransport, die unterschiedliche Kommunikationsstandards aufweisen können, wobei die Infrastruktur verbundener Objekte mindestens ein anforderndes verbundenes Objekt (loT1, IoT2, IoT3) umfasst, auf dem das Anwendungsmodul (13) installiert ist, wobei das anfordernde verbundene Objekt in der Lage ist, auf mindestens ein Gateway aus der Vielzahl von Verbindungs-Gateways zuzugreifen, wobei das Anwendungsmodul (13) konfiguriert ist zum:
- Überwachen der Netzwerkdaten, um ein Kommunikations-Repository zu erstellen,
- Überwachen der Benutzernutzungsdaten, um ein Benutzernutzungs-Repository des anfordernden verbundenen Objekts zu erstellen,
- Überwachen der Drittnutzungsdaten, um ein Drittnutzungs-Repository des anfordernden verbundenen Objekts zu erstellen,
- Analysieren der Netzwerkdaten, umfassend das Identifizieren verfügbarer Kommunikationszeiträume in Abhängigkeit von dem Kommunikations-Repository,
- Analysieren der Benutzernutzungsdaten, umfassend das Identifizieren verfügbarer Benutzernutzungszeiträume des anfordernden verbundenen Objekts in Abhängigkeit von dem Benutzernutzungs-Repository,
- Analysieren der Drittnutzungsdaten, umfassend das Identifizieren verfügbarer Drittnutzungszeiträume des anfordernden verbundenen Objekts in Abhängigkeit von dem Drittnutzungs-Repository, und
- Bestimmen mindestens eines Aktualisierungszeitplans für das anfordernde verbundene Objekt in Abhängigkeit von den verfügbaren Kommunikationszeiträumen, den verfügbaren Benutzernutzungszeiträumen, den verfügbaren Drittnutzungszeiträumen.

9. System zur Optimierung (10) der Aktualisierung von verbundenen Objekten (loT1, IoT2, IoT3) in einer Infrastruktur verbundener Objekte, umfassend eine Vielzahl von Verbindungs-Gateways (GW1, GW2) zu Teilnetzwerken (11, 12) für den Datentransport, die unterschiedliche Kommunikationsstandards aufweisen können, wobei das System zur Optimierung der Aktualisierung mindestens ein anforderndes verbundenes Objekt (loT1, IoT2, IoT3) umfasst, das dazu konfiguriert ist, auf mindestens ein Gateway aus der Vielzahl von Verbindungs-Gateways und auf mindestens ein Anwendungsmodul (13) nach Anspruch 8, das auf dem verbundenen Objekt installiert ist, zuzugreifen.

10. Verbundenes Objekt (loT1, IoT2, IoT3) umfassend ein Anwendungsmodul (13) nach Anspruch 8 zur Optimierung der Aktualisierung des verbundenen Objekts in einer Infrastruktur verbundener Objekte.

11. Computerprogramm zur Optimierung der Aktualisierung von verbundenen Objekten (loT1, IoT2, IoT3) in einer Infrastruktur verbundener Objekte, umfassend Programmcodeanweisungen zur Durchführung eines Verfahrens nach einem der Ansprüche 1 bis 7, wenn das Programm auf einer Computervorrichtung ausgeführt wird.

## Claims

1. A method (1) for optimizing the updating of connected objects (IoT1, loT2, loT3) in a connected object infrastructure comprising a plurality of connection gateways (GW1, GW2) for connecting to data transport sub-networks (11, 12) that may have different communication standards, said connected object infrastructure comprising at least one requesting connected object (IoT1, loT2, loT3) configured to access at least one gateway of the plurality of connection gateways and at least one application module (13) installed on said requesting connected object; **characterized in that** the method for optimizing the updating of connected objects comprises the following steps implemented by the application module (13) of said requesting connected object:
- a step of monitoring (200) network data, comprising the establishment of a communication repository,
- a step of monitoring (300) user usage data, comprising the establishment of a user usage repository of the requesting connected object,
- a step of monitoring (400) third-party usage data, comprising the establishment of a third-party usage repository of the requesting connected object,
- a step of analyzing (250) the network data, said analysis comprising the identification of available communication time periods based on the communication repository,
- a step of analyzing (350) the user usage data, said analysis comprising the identification of available user usage time periods of the requesting connected object based on the user usage repository,
- a step of analyzing (450) the third-party usage data, said analysis comprising the identification of available third-party usage time periods of the requesting connected object based on the third-party usage repository, and
- a step of determining (700) at least one update schedule for the requesting connected object based on the available communication time periods, the available user usage time periods, the available third-party usage time periods.

2. The optimization method (1) according to claim 1, **characterized in that it** comprises a step of categorizing (150) updating, by the application module (13).

3. The optimization method (1) according to claim 1 or 2, **characterized in that it** comprises a step of prioritizing (160) the updates, by the application module, based on update rules of the requesting connected object.

4. The optimization method (1) according to one of the preceding claims, **characterized in that it** comprises a step of queuing (720) the update, by the application module (13).

5. The optimization method (1) according to one of the preceding claims, **characterized in that it** comprises a step of transmitting (710) an alert, by the application module (13) when the available communication time periods and the available usage time periods do not include a matching update schedule.

6. The optimization method (1) according to any one of the preceding claims, **characterized in that it** comprises a step of selecting (820), by the requesting connected object, an optimal schedule based on the at least one update schedule and update rules of the requesting connected object.

7. The optimization method (1) according to one of the preceding claims, **characterized in that it** comprises a step of classifying (500), by the application module (13), the available user usage time periods and the available third-party usage time periods.

8. An application module (13) for optimizing the updating of connected objects (IoT1, loT2, loT3) in a connected object infrastructure including a plurality of connection gateways (GW1, GW2) for connecting to data transport sub-networks (11, 12) that may have different communication standards, said connected object infrastructure comprising at least one requesting connected object (IoT1, loT2, loT3) on which said application module (13) is installed, said requesting connected object being capable of accessing at least one gateway of the plurality of connection gateways, said application module (13) being configured to:
- monitor network data, in order to establish a communication repository,
- monitor user usage data, in order to establish a user usage repository of the requesting connected object,
- monitor third-party usage data, in order to establish a third-party usage repository of the requesting connected object,
- analyze the network data comprising the identification of available communication time periods based on the communication repository,
- analyze the user usage data comprising the identification of available user usage time periods of the requesting connected object based on the user usage repository,
- analyze the third-party usage data, comprising the identification of available third-party usage time periods of the requesting connected object based on the third-party usage repository, and
- determine at least one update schedule for the requesting connected object based on the available communication time periods, the available user usage time periods, the available third-party usage time periods.

9. An optimization system (10) for updating connected objects (IoT1, loT2, loT3) in a connected object infrastructure comprising a plurality of connection gateways (GW1, GW2) for connecting to data transport sub-networks (11, 12) that may have different communication standards, said update optimization system comprising at least one requesting connected object (IoT1, loT2, loT3) configured to access at least one gateway of the plurality of connection gateways and at least one application module (13) according to claim 8 installed on said connected object.

10. A connected object (IoT1, loT2, loT3) comprising an application module (13) according to claim 8 for optimizing the updating of the connected object in a connected object infrastructure.

11. A computer program for optimizing the updating of connected objects (IoT1, loT2, loT3) in a connected object infrastructure, comprising program code instructions for implementing a method according to any one of claims 1 to 7 when said program is executed on a computing device.
